# EUROPEAN PATENT SPECIFICATION

(11) **EP 3 322 738 B1**
(45) Date of publication and mention of the grant of the patent: **16.10.2019**
(21) Application number: 16750482.8
(22) Date of filing: 15.07.2016
(51) Int. Cl.: C08F 110/02, B01J 35/00, B01J 31/22

(54) **INORGANIC POROUS FRAMEWORK - LAYERED DOUBLE HYDROXIDE CORE-SHELL MATERIALS AS CATALYST SUPPORTS IN ETHYLENE POLYMERISATION**
ANORGANISCHES PORÖSES GERÜST GESCHICHTETE DOPPELHYDROXID-KERN-SCHALE-MATERIALIEN ALS KATALYSATORTRÄGER BEI DER ETHYLENPOLYMERISIERUNG
MATÉRIAUX À NOYAU-ENVELOPPE D'HYDROXYDE DOUBLE STRATIFIÉ DE STRUCTURE POREUSE MINÉRALE EN TANT QUE SUPPORTS DE CATALYSEUR DANS LA POLYMÉRISATION DE L'ÉTHYLÈNE

(30) Priority: 16.07.2015 GB 201512452
(43) Date of publication of application: 23.05.2018
(73) Proprietor: SCG Chemicals Co., Ltd., Bangkok 10800 (TH)
(72) Inventor: O'HARE, Dermot, Oxford OX1 3TA (GB); BUFFET, Jean-Charles, Oxford OX1 3TA (GB); CHEN, Chunping, Oxford OX1 3TA (GB)
(74) Representative: HGF Limited
(86) International application number: PCT/GB2016/052160
(87) International publication number: WO 2017/009666

(56) References cited:
- WO-A2-2014/051529
- WO-A2-2016/110699
- JEAN-CHARLES BUFFET ET AL: "Ethylene polymerisation using solid catalysts based on layered double hydroxides", POLYMER CHEMISTRY, vol. 6, no. 13, 12 February 2015 (2015-02-12), pages 2493-2503, XP055313606, GB ISSN: 1759-9954, DOI: 10.1039/C4PY01742K
- JEAN-CHARLES BUFFET ET AL: "Highly Tunable Catalyst Supports for Single-Site Ethylene Polymerization", CHEMISTRY OF MATERIALS, vol. 27, no. 5, 10 March 2015 (2015-03-10) , pages 1495-1501, XP055313812, US ISSN: 0897-4756, DOI: 10.1021/cm503433q
- JEAN-CHARLES BUFFET ET AL: "Metallocene supported core@LDH catalysts for slurry phase ethylene polymerisation", CHEMICAL COMMUNICATIONS - CHEMCOM., vol. 52, no. 21, 22 February 2016 (2016-02-22), pages 4076-4079, XP055283034, ISSN: 1359-7345, DOI: 10.1039/C6CC00280C

## Description

### INTRODUCTION

The present invention relates to inorganic, porous, framework - layered double hydroxide (LDH) core-shell materials as catalyst supports, to methods of making them and to their use in ethylene polymerisation.

### BACKGROUND

Layered double hydroxides (LDHs) are a class of compounds which comprise two or more metal cations and have a layered structure. A review of LDHs is provided in Structure and Bonding; Vol. 119, 2005 Layered Double Hydroxides ed. X Duan and D.G. Evans. The hydrotalcites, perhaps the most well-known examples of LDHs, have been studied for many years. LDHs can intercalate anions between the layers of the structure.

LDHs have captured much attention in recent years due to their impact across a range of applications, including catalysis, optics, medical science and in inorganic-organic nanocomposites. A new family of dispersible, hydrophobic LDHs using an aqueous miscible organic solvent treatment (AMOST) method has been synthesized. These, so called, AMO-LDHs may exhibit surface areas in excess of 400 m²g⁻¹ and pore volumes in excess of 2.15 cc g⁻¹, which is nearly two orders of magnitude higher than conventional LDHs. AMO-LDHs have a unique chemical composition, which may be defined by the formula A

[M^{z+}₁₋ₓM'^{y+}ₓ(OH)₂]^{a+}(A*ⁿ⁻*)_{a/n}•bH₂O•c(AMO-solvent) (A),

where M^{z+} is a metal cation of charge z or a mixture of two or more metal cations of charge z; M'^{y+} is a metal cation of charge y or a mixture of two or more metal cations of charge y; z is 1 or 2; and y is 3 or 4, 0 < x < 1, *b* = 0-10, c = 0.01-10, A is a charge compensating anion, *n,* n > 0 (typically 1-5) and a = *z*(1-*x*)+*xy*-2. AMO-solvents are those which are 100% miscible in water. Typically, the AMO-solvent is acetone or methanol.

Core shell particles are described in the literature by "core@shell" (for example by Teng et al, Nano Letters, 2003, 3, 261-264), or by "core/shell" (for example J. Am. Chem. Soc., 2001, 123, pages 7961-7962). We have adopted the "core@shell" nomenclature as it is emerging as the more commonly accepted abbreviation.

SiO₂/LDH core-shell microspheres are described by Shao et al, Chem. Mater. 2012, 24, pages 1192-1197. Prior to treatment with a metal precursor solution, the SiO₂ microspheres are primed by dispersing them in an AI(OOH) primer sol for two hours with vigorous agitation followed by centrifuging, washing with ethanol and drying in air for 30 minutes. This priming treatment of the SiO₂ microspheres was repeated 10 times before the SiO₂ spheres thus coated with a thin AI(OOH) film were autoclaved at 100°C for 48 hours in a solution of Ni(NO₃)₂•6H₂O and urea. Hollow SiO₂-NiAl-LDH microspheres obtained by this process were reported as exhibiting excellent pseudocapacitance performance. Unfortunately, the requirement for the AI(OOH) priming of the SiO₂ surface, prior to LDH growth, makes this process unsuitable for use on an industrial scale.

Chen et al, J. Mater. Chem. A, 1, 3877-3880 describes the synthesis of SiO₂@MgAl-LDHs having use in the removal of pharmaceutical pollutants from water.

Furthermore, coating LDHs and similar materials onto a given inorganic, porous, framework typically results in a reduction of porosity and surface area of the core@framework material. This usually arises due to the coating 'filling in' or covering the pores of the inorganic framework.

Polyethylene is the most widely used polyolefin with a global production in 2011 of over 75 million tons per year. Innovation in both the synthesis and the properties of polyethylene is still at the forefront in both industry and academia. It is now more than thirty years since the first discoveries of highly active homogeneous catalysts for olefin polymerisation. Since then, intensive research has led to greater control over polymerisation activity and polymer structure than can generally be obtained with the original type of heterogeneous Ziegler-Natta catalysts. Many different supports (e.g. SiO₂, Al₂O₃, MgCl₂ and clays) and immobilisation procedures have been investigated.

WO 2014/051529 discloses catalyst systems for olefin polymerisation comprising a transition metal complex supported on an AMO-LDH.

The problem to be solved by the present invention is to provide a novel support material for heterogeneous ethylene polymerisation that gives high polymerisation activity per mol transition metal, good molecular weight control and regular free-flowing polymer particles.

Furthermore, it is an objective of the present invention to provide novel support material for heterogeneous ethylene polymerisation that have high surface areas and porosities, preferably surface areas and porosities that not significantly altered by the coating process.

### SUMMARY OF THE INVENTION

According to a first aspect of the present invention, there is provided a catalyst system comprising an activated solid support material and having, on its surface, one or more catalytic transition metal complex, wherein the solid support material comprises a core@layered double hydroxide shell material having the formula I

Tₚ@{[M^{z+}₍₁₋ₓ₎M'ₓ^{y+}(OH)₂]^{a+}(Xⁿ⁻)_{a/n}•bH₂O•c(AMO-solvent)}_{q} (I)

wherein T is a solid, porous, inorganic oxide-containing framework material,
M^{z+} and M'^{y+} are independently selected charged metal cations; M^{z+} is a metal cation of charge z or a mixture of two or more metal cations each independently having the charge z; M'^{y+} is a metal cation of charge y or a mixture of two or more metal cations each independently having the charge y;
z = 1 or 2;
y = 3 or 4;
   0 < x < 0.9;
   b is 0 to 10;
   c is 0.01 to 10;
   p > 0;
   q > 0;
   Xⁿ⁻ is an anion; with n > 0;
   a = z(1-x) + xy-2; and
AMO-solvent is an organic solvent which is completely miscible with water;
wherein:
T is a molecular sieve material selected from aluminium silicate, vanadium silicate, iron silicate, silicon-aluminium phosphate (SAPO) and aluminium phosphate (AIPO);
the AMO-solvent is selected from acetone, methanol, ethanol or isopropanol; and
the catalytic transition metal complex is at least one complex of a metal selected from zirconium, iron, chromium, cobalt, nickel, titanium and hafnium, the complex containing one or more aromatic or heteroaromatic ligands.

According to a second aspect of the present invention, there is provided a method of making the catalyst system according to any of the preceding claims which comprises
(a) providing a solid support material comprising a core@layered double hydroxide shell material having the formula I

   Tₚ@{[M^{z+}₍₁₋ₓ₎M'ₓ^{y+}(OH)₂]^{a+}(Xⁿ⁻)_{a/n}•bH₂O•c(AMO-solvent)}_{q} (I)

   wherein T is a solid, porous, inorganic oxide-containing framework material,
   M^{z+} and M'^{y+} are two independently selected charged metal cations; M^{z+} is a metal cation of charge z or a mixture of two or more metal cations each independently having the charge z; M'^{y+} is a metal cation of charge y or a mixture of two or more metal cations each independently having the charge y;
   z = 1 or 2;
   y = 3 or 4;
   0 < x < 0.9;
   b is 0 to 10;
   c is 0.01 to 10;
   p > 0;
   q > 0;
   Xⁿ⁻ is an anion; with n > 0;
   a = z(1-x) + xy-2; and
      AMO-solvent is an organic solvent which is completely miscible with water; and
(b) thermally treating the core@layered double hydroxide shell material;
(c) activating the material obtained from the thermal treatment step (b); and
(d) treating the activated material obtained from step (c) with at least one catalytic transition metal complex having olefin polymerisation catalytic activity;
wherein:
T is a molecular sieve material selected from aluminium silicate, vanadium silicate, iron silicate, silicon-aluminium phosphate (SAPO) and aluminium phosphate (AIPO);
the AMO-solvent is selected from acetone, methanol, ethanol or isopropanol; and
the catalytic transition metal complex is at least one complex of a metal selected from zirconium, iron, chromium, cobalt, nickel, titanium and hafnium, the complex containing one or more aromatic or heteroaromatic ligands.

According to a third aspect of the present invention, there is provided a catalyst system, as defined herein above, obtainable by, obtained by, or directly obtained by the method defined herein.

According to a fourth aspect of the present invention, there is provided a use of a catalyst system, as defined herein, in combination with a suitable scavenger as a catalyst in the polymerisation and/or copolymerisation of at least one olefin for producing a homopolymer and/or copolymer.

According to a fifth aspect of the present invention, there is provided a process for preparing a polyolefin homopolymer or a polyolefin copolymer which comprises reacting olefin monomers in the presence of a catalyst system, as defined herein, wherein the polyolefin is preferably polyethylene and the olefin monomer is preferably ethylene.

### DETAILED DESCRIPTION OF THE INVENTION

### Definitions

The following terms "core@layered double hydroxide shell", "inorganic porous framework@LDH core-shell material", "core@LDH" and "core@AMO-LDH" are be used synonymously throughout the application. All of these terms may be used interchangeably to refer to a central core material (e.g. an inorganic porous framework material) which is coated with a layer of layered double hydroxide. Similarly, the term "Tₚ @ {[M^{z+}₍₁₋ₓ₎M'ₓ^{y+}(OH)₂]^{a+}(Xⁿ⁻)_{a/n}•bH₂O•c(AMO-solvent)}_{q}" will be understood as referring to a solid, porous, inorganic oxide-containing framework material that is coated with one or more layers of layered double hydroxide of the given formula.

### Catalyst systems of the present invention

The present invention provides a catalyst system comprising an activated solid support material having, on its surface, one or more catalytic transition metal complex wherein the solid support material comprises a core@layered double hydroxide shell material having the formula

Tₚ@{[M^{z+}₍₁₋ₓ₎M'ₓ^{y+}(OH)₂]^{a+}(Xⁿ⁻)_{a/n}•bH₂O•c(AMO-solvent)}_{q} (I)

wherein T is a solid, porous, inorganic oxide-containing framework material,
M^{z+} is a metal cation of charge z or a mixture of two or more metal cations each independently having the charge z; M'^{y+} is a metal cation of charge y or a mixture of two or more metal cations each independently having the charge y;
z = 1 or 2;
y = 3 or 4;
0 < x < 0.9;
b is 0 to 10;
c is 0.01 to 10;
p > 0;
q > 0;
Xⁿ⁻ is an anion; with n > 0;
a = z(1-x) + xy-2; and
AMO-solvent is an aqueous miscible organic solvent; wherein:
   T is a molecular sieve material selected from aluminium silicate, vanadium silicate, iron silicate, silicon-aluminium phosphate (SAPO) and aluminium phosphate (AIPO);
   the AMO-solvent is selected from acetone, methanol, ethanol or isopropanol; and
   the catalytic transition metal complex is at least one complex of a metal selected from zirconium, iron, chromium, cobalt, nickel, titanium and hafnium, the complex containing one or more aromatic or heteroaromatic ligands.

The catalyst systems of the present invention advantageously allow for novel catalyst supports with high porosities and surface areas, that allow for good turn overs and molecular weight control in the polymerisation of ethylene.

### Core-layered double hydroxide shell material

A core-layered double hydroxide shell material comprises a core microparticle having solid AMO-LDH attached to its surface. Such a material is denoted as core@AMO-LDH. The core microparticles are negatively charged, which compliments the positive charged surface of AMO-LDHs, allowing for additive-free binding of the AMO-LDH by electrostatic interactions.

The core microparticles are solid, porous, inorganic oxide-containing framework materials, and thus are synonymously referred to as such throughout this application.

The core@layered double hydroxide shell materials are prepared by growing a LDH on to the surface of the solid, porous, inorganic oxide-containing framework material.

By growing the LDHs on the surface of the solid, porous, inorganic oxide-containing framework material the inventors surprising found that discrete particles of core@layered double hydroxide material with high porosities, surface area and excellent absorption properties could be achieved. The treatment with and subsequent inclusion of an aqueous miscible organic (AMO) solvent in the core@layered double hydroxide shell material was found to further increase the improvement in porosity, surface area and absorption demonstrated by the core@layered double hydroxide shell materials.

Furthermore, by growing the LDHs on the surface of the solid, porous, inorganic oxide-containing framework material the thickness of the LDH layer is able to be controlled, which advantageously allows for uniform particles to be prepared.

Suitably, the core@layered double hydroxide materials of the present invention comprise an LDH layer with an average thickness of between 5 nm and 300 nm. More suitably, the core@layered double hydroxide materials of the present invention comprise an LDH layer with an average thickness of between 30 nm and 200 nm. Yet more suitably, the core@layered double hydroxide materials of the present invention comprise an LDH layer with an average thickness of between 40 nm and 150 nm. Most suitably, the core@layered double hydroxide materials of the present invention comprise an LDH layer with an average thickness of between 40 nm and 100 nm.

Furthermore, the core@layered double hydroxide materials of the present invention allow for coated solid, porous, inorganic oxide-containing framework materials which retain the surface area and porosity characteristics of their component materials.

In a particular embodiment, the core@layered double hydroxide materials have specific surface area (a Brunauer- Emmett Teller (BET) surface area) of at least 50 m²/g, preferably at least 100 m²/g, more preferably at least 250 m²/g, yet more preferably at least 350 m²/g, even more preferably at least 450 m²/g, still more preferably at least 550 m²/g, and most preferably at least 650 m²/g.

In another embodiment, the core@layered double hydroxide materials have an external surface area of at least 50 m²/g, preferably at least 100 m²/g, more preferably at least 125 m²/g, even more preferably at least 150 m²/g, and most preferably at least 175 m²/g.

In a further embodiment, the core@layered double hydroxide materials have a micropore surface area of at least 50 m²/g, preferably at least 100 m²/g, more preferably at least 150 m²/g, yet more preferably at least 200 m²/g, even more preferably at least 300 m²/g, and most preferably at least 400 m²/g.

### Inorganic porous framework

The core material T, as stated above, is a solid, porous, inorganic oxide-containing framework material. This framework material is a molecular sieve which is composed of a porous framework structure which contains ring structures comprising atoms in a tetrahedral arrangement. The framework, as stated above, is porous and comprises pores having a diameter of up to 50nm, suitably up to 40 nm, more suitably up to 30 nm and most suitably up to 20 nm. Accordingly, the framework material may be either microporous, containing pores with a diameter less than 2 nm, or mesoporous, containing pores with a diameter of between 2 and 50 nm.

In one embodiment, the framework material is microporous, i.e. having pores of diameter less than 2 nm, suitably less than 1.5 nm and more suitably less than 1 nm.

In another embodiment, the framework material is mesoporous, i.e. having pores of diameter of between 2 nm to 50 nm, suitably between 2 nm and 30 nm, more suitably between 2 nm and 20 nm and most suitably between 2 nm and 10 nm.

The molecular sieve comprises aluminium silicate, vanadium silicate or iron silicate. Alternatively, the molecular sieve comprises silicon-aluminium phosphate (SAPO) or aluminium phosphate (AIPO).

According to an embodiment of the invention, the molecular sieve material is aluminium silicate. Typically, the silicon : aluminium molar ratio is from 1 to 100. Preferably, the aluminium silicate is one in which the silicon : aluminium ratio is 1 to 50, more preferably 1 to 40. A further preferred aluminium silicate has a silicon:aluminium ratio of 5:100, preferably 5 to 50, more preferably 5 to 40.

According to an embodiment, the solid, porous, inorganic oxide-containing framework material T is a zeolite material. Zeolites are microporous crystalline solids with well-defined structures and, generally, they contain silicon, aluminium and oxygen in their framework and cations, water and/or other molecules within their pores. Typically, the zeolite material will be composed of aluminium silicate. Preferably, the aluminium silicate zeolite has a framework structure selected from zeolite types A, X, Y, LTA, FAU, BEA, MOR and MFI. In the case of the latter (BEA, MOR and MFI), this is the framework code according to the Structure Commission of the International Zeolite Association. Such three letter codes are assigned to particular zeolite structures to identify the type of material they are composed of and the structure they adopt. For example, LTA is the code for zeolite type Linde Type A and MFI is the code for zeolite type ZSM-5.

The aluminium silicate zeolite may have a framework structure containing non-framework cations. Such cations may be organic cations or inorganic cations. A framework structure may contain both inorganic and organic cations as non-framework cations. Such non-framework cations may, for example, be selected from NR₄⁺, where R is an optionally-substituted alkyl group, (e.g. R = Me, Et, Pr, Bu), Na⁺, K⁺, Cs⁺ and H⁺. Suitably, the non-framework cation is selected from Na⁺, H⁺ or NR₄⁺, wherein R is methyl or ethyl.

The aluminium silicate zeolite may be a crystalline aluminosilicate zeolite having a composition, in terms of mole ratios of oxides, as follows:

0.9 ± 0.2 M^{α}_{2/n} O: Al₂O₃: ^{β}SiO₂: ^{γ}H₂O

wherein M^{α} is at least one cation having a valence n, β is at least 2 and y is between 0 and 40.

Each zeolite classification type (e.g. LTA, FAU etc) may have one or more further sub divisions associated with it. For example, FAU zeolites can be further sub divided into X or Y zeolites depending on the silica-to-alumina ratio of their framework; with X zeolites having a silica-to-alumina ratio of between 2 to 3 and Y zeolites having a silica-to-alumina ratio of greater than 3. It will be understood that all such sub-divisions are covered by the definitions recited above.

In a particular embodiment of the present invention, the solid, porous, inorganic oxide-containing framework material is selected from: i) an aluminium silicate with a framework structure selected from zeolite types LTA, FAU, BEA, MOR or MFI; ii) an aluminophosphate; or iii) a silicoaluminophosphate. Suitably, the solid, porous, inorganic oxide-containing framework material is selected from: i) an aluminium silicate with a framework structure selected from zeolite types LTA, FAU or MFI; ii) a microporous aluminophosphate; or iii) a microporous silicoaluminophosphate. Most suitably, the solid, porous, inorganic oxide-containing framework material is selected from; i) an aluminium silicate with a framework structure selected from zeolite types FAU or MFI; ii) a microporous aluminophosphate; or iii) a microporous silicoaluminophosphate.

In further embodiment, the solid, porous, inorganic oxide-containing framework material is selected from a zeolite selected from HY 5.1 or ZSM5-23, the microporous aluminophosphate AlPO5, or the microporous silicoaluminophosphate SAPO5.

### Layered Double Hydroxide (LDH)

The LDH grown on the surface of the solid, porous, inorganic oxide-containing framework material comprises, and preferably consists of, LDH represented by the general formula (I)

[M^{z+}₁₋ₓM'^{y+}ₓ(OH)₂]^{a+}(Xⁿ⁻)_{a/n}•bH₂O•c(AMO-solvent) (I),

wherein;
M^{z+} is a metal cation of charge z or a mixture of two or more metal cations each independently having the charge z;
M'^{y+} is a metal cation of charge y or a mixture of two or more metal cations each independently having the charge y;
z = 1 or 2;
y = 3 or 4;
0 < x < 0.9;
b = 0 - 10;
c = 0.01 - 10;
Xⁿ⁻ is an anion, n is the charge on the anion, n > 0 (preferably 1-5);
a = z(1-x)+xy-2; and
AMO-solvent is an organic solvent completely (i.e. suitably >95%, more suitably >98% and most suitably 100%) miscible with water.

As stated above, M^{z+} and M'^{y+} are different charged metal cations. M^{z+} is a metal cation of charge z or a mixture of two or more metal cations of charge z; M'^{y+} is a metal cation of charge y or a mixture of two or more metal cations of charge y.

Having regard to the fact that z = 1 or 2, M will be either a monovalent metal or a divalent metal. M', in view of the fact that y = 3 or 4, will be a trivalent metal or a tetravalent metal.

A preferred example of a monovalent metal, for M, is Li. Examples of divalent metals, for M, include Ca, Mg, Zn, Fe, Co, Cu and Ni and mixtures of two or more of these. Preferably, the divalent metal M, if present, is Ca, Ni or Mg. Examples of metals, for M', include Al, Ga, In, Y and Fe. Preferably, M' is Al. Preferably, the LDH will be a Li-Al, an Mg-Al or a Ca-Al AMO-LDH.

The anion Xⁿ⁻ in the LDH is any appropriate inorganic or organic anion. Examples of anions that may be used, as Xⁿ⁻, in the LDH include carbonate, hydroxide, nitrate, borate, sulphate, phosphate and halide (F⁻, Cl⁻, Br⁻, I⁻) anions. Preferably, the anion Xⁿ⁻ is selected from CO₃²⁻, NO₃⁻ and Cl⁻.

The AMO-solvent is any aqueous miscible organic solvent, preferably a solvent which is >95%, more preferably >98% and most suitably 100% miscible with water. Examples of suitable water-miscible organic solvents include one or more of acetone, acetonitrile, dimethylformamide, dimethylsulfoxide, dioxane, ethanol, methanol, n-propanol, isopropanol, or tetrahydrofuran. In the present invention, the AMO-solvent is selected from acetone, methanol, isopropanol and ethanol, with acetone and ethanol being the particularly preferred solvent and ethanol being the most preferred solvent.

According to one preferred embodiment, the layered double hydroxides are those having the general formula I above in which:
M^{z+} is a divalent metal cation;
M'^{y+} is a trivalent metal cation; and
each of b and c is a number > zero. Typically, c is a number from 0.01 to 10, preferably > 0.01 and < 10, which gives compounds optionally hydrated with a stoichiometric amount or a non-stoichiometric amount of water and/or an aqueous-miscible organic solvent (AMO-solvent) such as acetone.

Preferably, in the LDH of the above formula, M is Mg or Ca and M' is Al. The counter anion Xⁿ⁻ is typically selected from CO₃²⁻, OH⁻, F⁻, Cl⁻, Br⁻, I⁻, SO₄²⁻ , NO₃⁻ and PO₄³⁻. In a most preferred embodiment, the LDH will be one wherein M is Mg, M' is Al and Xⁿ⁻ is CO₃²⁻.

### Particularly preferred embodiments of the core-layered double hydroxide shell material

The following represent particular embodiments of the core@layered double hydroxide shell material:
1.1 The core@layered double hydroxide materials have the general formula I

   Tₚ@{[M^{z+}₍₁₋ₓ₎M'^{y+}ₓ(OH)₂]^{a+}(Xⁿ⁻)_{a/n}•bH₂O•c(AMO-solvent)}_{q} (I)

   wherein,
   T is a molecular sieve material selected from aluminium silicate, vanadium silicate, iron silicate, silicon-aluminium phosphate (SAPO) and aluminium phosphate (AIPO), preferably an aluminium silicate having a silicon:aluminium ratio of from 1 to 100, more preferably of 1 to 50, most preferably 1 to 40;
   M^{z+} is selected from Li⁺, Ca²⁺, Cu²⁺, Zn²⁺, Ni²⁺ or Mg²⁺, and M'^{y+} is Al³⁺, Ga³⁺, In³⁺, or Fe³⁺;
   0 < x < 0.9;
   b is 0 to 10;
   c is 0.01 to 10;
   p > 0,
   q > 0;
   Xⁿ⁻ is selected from carbonate, hydroxide, nitrate, borate, sulphate, phosphate and halide (F⁻, Cl⁻, Br⁻, I⁻) anions; with n > 0 (preferably 1-5) a = z(1-x) + xy-2; and
   the AMO-solvent is selected from acetone, methanol, ethanol or isopropanol.
1.2 The core@layered double hydroxide materials have the general formula Ia

   Tₚ@{[M^{z+}₍₁₋ₓ₎M'^{y+}x(OH)₂]^{a+}(Xⁿ⁻)_{a/n}•bH₂O•c(AMO-solvent)}_{q} (Ia)

   wherein,
   T is a molecular sieve material selected from aluminium silicate, vanadium silicate, iron silicate, silicon-aluminium phosphate (SAPO) and aluminium phosphate (AIPO), preferably an aluminium silicate having a silicon:aluminium ratio of from 1 to 100, more preferably of 1 to 50, most preferably 1 to 40;
   M^{z+} is selected from Li⁺, Ca²⁺, Cu²⁺, Zn²⁺, Ni²⁺ or Mg²⁺, and M'^{y+} is Al³⁺, Ga³⁺, ln³⁺, or Fe³⁺;
   0 < x < 0.9;
   b is 0 to 10;
   c is 0.01 to 10;
   p > 0,
   q > 0;
   Xⁿ⁻ is is selected from CO₃²⁻, NO₃⁻ or Cl⁻; with n > 0 (preferably 1-5)
   a = z(1-x) + xy-2; and
   the AMO-solvent is selected from ethanol, isopropanol or acetone.
1.3 The core@layered double hydroxide materials have the general formula Ib

   Tₚ@{[M^{z+}₍₁₋ₓ₎M'^{y+}ₓ(OH)₂]^{a+}(Xⁿ⁻)_{a/n}•bH₂O•c(AMO-solvent)}_{q} (Ib)

   wherein,
   T is; i) an aluminium silicate with a framework structure selected from zeolite types LTA, FAU, BEA, MOR or MFI; ii) an aluminophosphate; or iii) a silicoaluminophosphate, wherein the aluminium silicate has a silicon:aluminium ratio of from 1 to 50, more preferably of 1 to 40, most preferably of 1 to 30;
   M^{z+} is selected from Li⁺, Ca²⁺, Cu²⁺, Zn²⁺, Ni²⁺ or Mg²⁺, and M'^{y+} is Al³⁺, Ga³⁺, ln³⁺, or Fe³⁺;
   0 < x < 0.9;
   b is 0 to 10;
   c is 0.01 to 10;
   p > 0,
   q > 0;
   Xⁿ⁻ is is selected from CO₃²⁻, NO₃⁻ or Cl⁻; with n > 0 (preferably 1-5)
   a = z(1-x) + xy-2; and
   the AMO-solvent is selected from ethanol or acetone.
1.4 The core@layered double hydroxide materials have the general formula Ic

   Tₚ@{[M^{z+}₍₁₋ₓ₎M'^{y+}ₓ(OH)₂]^{a+}(Xⁿ⁻)_{a/n}•bH₂O•c(ethanol)}_{q} (Ic)

   wherein,
   T is; i) an aluminium silicate with a framework structure selected from zeolite types LTA, FAU, BEA, MOR or MFI; ii) an aluminophosphate; or iii) a silicoaluminophosphate; wherein the aluminium silicate has a silicon:aluminium ratio of from 1 to 50, more preferably of 1 to 40, most preferably of 1 to 30;
   M^{z+} is selected from Li⁺, Ca²⁺, Cu²⁺, Zn²⁺, Ni²⁺ or Mg²⁺, and M'^{y+} is Al³⁺, Ga³⁺, ln³⁺, or Fe³⁺;
   0 < x < 0.9;
   b is 0 to 10;
   c is 0.01 to 10;
   p > 0,
   q > 0;
   Xⁿ⁻ is is selected from CO₃²⁻, NO₃⁻ or Cl⁻; with n > 0 (preferably 1-5)
   a = z(1-x) + xy-2.
1.5 The core@layered double hydroxide materials have the general formula Id

   Tₚ@{[M^{z+}₍₁₋ₓ₎M'^{y+}ₓ(OH)₂]^{a+}(Xⁿ⁻)_{a/n}•bH₂O•c(ethanol)}_{q} (Id)

   wherein,
   T is; i) an aluminium silicate with a framework structure selected from zeolite types LTA, FAU or MFI; ii) an aluminophosphate; or iii) a silicoaluminophosphate; wherein the aluminium silicate has a silicon:aluminium ratio of from 1 to 50, more preferably of 1 to 40, most preferably of 1 to 30;
   M^{z+} is selected from Li⁺, Ca²⁺, Ni²⁺ or Mg²⁺, and M'^{y+} is Al³⁺ or Fe³⁺;
   0 < x < 0.9;
   b is 0 to 10;
   c is 0.01 to 10;
   p > 0,
   q > 0;
   Xⁿ⁻ is is selected from CO₃²⁻ or NO₃⁻; with n > 0 (preferably 1-5)
   a = z(1-x) + xy-2

### Process for the preparation of the core-layered double hydroxide shell materials

The core@LDH shell material of the invention, as described above, may be prepared by a method which comprises the steps:
(a) contacting a metal ion containing solution containing metal ions M^{z+} and M'^{y+} and particles of the framework material and a metal ion containing solution containing metal ions M^{z+} and M'^{y+} and anion Xⁿ⁻ in the presence of a base;
(b) collecting the product formed; and
(c) treating the product with AMO-solvent and recovering the solvent treated material to obtain the core@LDH material.

In carrying out the method of preparing the core@AMO-LDHs, typically the core microparticles are dispersed in an aqueous solution containing the desired anion salt, for example Na₂CO₃. A metal precursor solution, i.e. a solution combining the required monovalent or divalent metal cations and the required trivalent cations may then be added, preferably drop-wise, into the dispersion of the core microparticles. Preferably, the addition of the metal precursor solution is carried out under stirring. The pH of the reaction solution is preferably controlled within the pH range 8 to 11, more preferably 9 to 10. At pH 9 AMO-LDH nanosheets are attached to the surface of the core particles. When pH was adjusted to 10, it is clearly observed that a uniform layer of LDH nanosheets is homogeneously grown on the surface of the particles with hierarchal texture. The AMO-LDH layer thickness achieved at pH 10 is typically 80-110 nm. Increasing the pH to 11 also shows full coverage of the surface with AMO-LDH nanosheets. Typically, NaOH may be used to adjust the pH of the solution.

During the reaction, the LDH produced from the metal precursor solution reaction is formed on the surfaces of the core material particles as nanosheets.

Without wishing to be bound by theory, it is believed that a small amount of aluminium leaching from the porous, inorganic framework material allows the seeded growth of the LDHs on to their surface.

It is preferred that the temperature of the metal ion containing solution in step (a) is within a range of from 20 to 150°C, more preferably, from 20 to 80°C, yet more preferably, from 20 to 50°C and most preferably from 20 to 40°C.

The obtained solid product is collected from the aqueous medium. Examples of methods of collecting the solid product include centrifugation and filtration. Typically, the collected solid may be re-dispersed in water and then collected again. Preferably, the collection and re-dispersion steps are repeated twice. In order to obtain a product containing AMO-solvent, the material obtained after the centrifugation/re-dispersion procedure described above is washed with, and preferably also re-dispersed in, the desired solvent, for instance acetone. If re-dispersion is employed, the dispersion is preferably stirred. Stirring for more than 2 hours in the solvent is preferable. The final product may then be collected from the solvent and then dried, typically in an oven for several hours.

The growth of AMO-LDH nanosheets on the surface of the SiO₂ microspheres is "tuneable". That is to say, by varying the chemistry of the precursor solution and the process conditions, for instance the pH of the reaction medium, temperature of the reaction and the rate of addition of the precursor solution to the dispersion of core microparticles, the extent of, and the length and/or thickness of the AMO-LDH nanosheets formed on the surfaces of the core microparticles can be varied.

The production of the core@AMO-LDH microparticles according to the invention can be carried out as a batch process or, with appropriate replenishment of reactants, as a continuous process.

In another aspect of the present invention, there is provided a core@layered double hydroxide shell material obtainable by, obtained by, or directly obtained by the process described hereinabove.

### Catalyst systems

As stated above, the catalyst system of the invention comprises a solid support material, as described above, having on its surface one or more catalytic transition metal complexes.

The catalyst system of the invention exhibit superior catalytic performance when compared with current permethyl pentalene metallocene compounds/compositions used in the polymerisation of α-olefins.

By the term "transition metal" it is meant a d-block metal selected from zirconium, iron, chromium, cobalt, nickel, titanium and hafnium. The transition metal will be complexed with one or more aromatic or heteroaromatic cyclic compounds to achieve complexes which may be summarized under the term metallocene. Such aromatic compounds, useful for complexing with the transition metal, include optionally-substituted cyclopentadiene, optionally-substituted indene and optionally-substituted pentalene. The aromatic compound used to complex the transition metal may, further, contain two linked, optionally-substituted cyclopentadiene groups or two linked, optionally-substituted indene and optionally-substituted pentalene groups. In such linked moieties, the linking group may be provided by a lower alkylene group. Preferably, the catalytic transition metal complex is a metallocene containing zirconium or hafnium.

Examples of catalysts include known polymerisation catalysts, for example metallocenes, constrained geometry, FI complexes and dimino complexes.

According to one embodiment of the invention, the transition metal complex used in the catalyst system will be selected from:

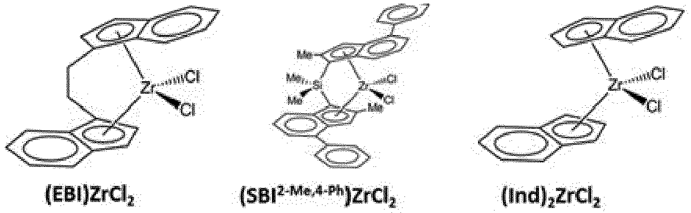

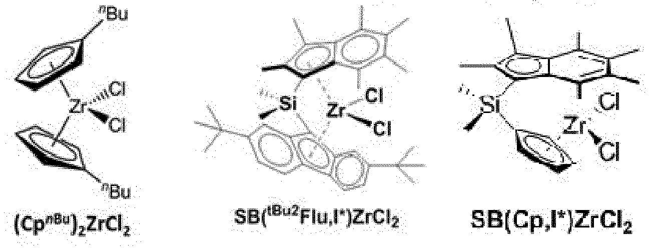

According to another embodiment of the invention, the transition metal complex used in the catalyst system will be selected from:

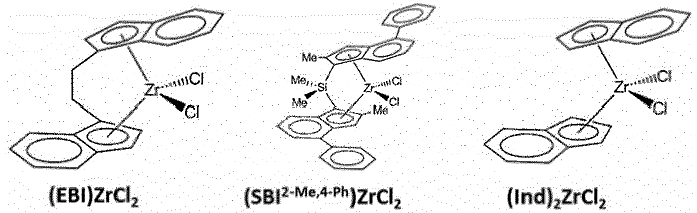

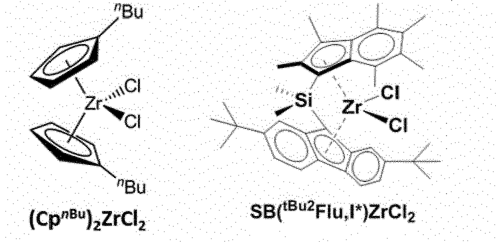

In the formulae shown above, EBI is ethylene bridged indene, ^{2-Me,4-Ph}SBI is dimethylsilyl bridged 2-methyl,4-phenylindene, ^{nBu}Cp is n-butylcyclopentadiene.

As stated above, the catalyst system of the invention may contain more than one catalytic transition metal complex, preferably 1 to 4 and more preferably 1 to 2 catalytic transition metal complexes.

In a preferred embodiment, the system is obtainable by a process comprising the step of activating the solid support material with an alkylaluminoxane or triisobutylaluminium (TIBA), triethylaluminium (TEA) or diethylaluminium chloride (DEAC).

In a further preferred embodiment, the alkylaluminoxane is methylaluminoxane (MAO) or modified methylaluminoxane (MMAO).

### Process for the preparation of the catalyst systems of the present invention

According to another aspect of the present invention, there is provided a method of making the catalyst system which comprises
(a) providing a solid support material comprising a core@layered double hydroxide shell material having the formula I

   Tₚ@{[M^{z+}₍₁₋ₓ₎M'ₓ^{y+}(OH)₂]^{a+}(Xⁿ⁻)_{a/n}•bH₂O•c(AMO-solvent)}_{q} (I)

   wherein T is a solid, porous, inorganic oxide-containing framework material,
   M^{z+} and M'^{y+} are two different charged metal cations; M^{z+} is a metal cation of charge z or a mixture of two or more metal cations each independently having the charge z; M'^{y+} is a metal cation of charge y or a mixture of two or more metal cations each independently having the charge y;
   z = 1 or 2;
   y = 3 or 4;
   0 < x < 0.9;
   b is 0 to 10;
   c is 0.01 to 10;
   p > 0;
   q > 0;
   Xⁿ⁻ is an anion; with n > 0;
   a = z(1-x) + xy-2; and
   AMO-solvent is an aqueous miscible organic solvent,
(b) thermally treating core@layered double hydroxide shell material,
(c) activating the heat treated material obtained from the thermal treatment step (b); and
(d) treating the activated material obtained from step (c) with at least one catalytic transition metal complex having olefin polymerisation catalytic activity;
wherein:
T is a molecular sieve material selected from aluminium silicate, vanadium silicate, iron silicate, silicon-aluminium phosphate (SAPO) and aluminium phosphate (AIPO);
the AMO-solvent is selected from acetone, methanol, ethanol or isopropanol; and
the catalytic transition metal complex is at least one complex of a metal selected from zirconium, iron, chromium, cobalt, nickel, titanium and hafnium, the complex containing one or more aromatic or heteroaromatic ligands.

Preferably, the solid support material has the formula I in which M' is Al.

More preferably, the solid support material has the formula I in which M is Li, Mg or Ca or mixtures thereof.

Most preferably, the solid support material has the formula I in which Xⁿ⁻ is selected from CO₃²⁻, OH⁻, F⁻, Cl⁻, Br⁻, I⁻, SO₄²⁻, NO₃⁻ and PO₄³⁻, preferably CO₃²⁻, Cl⁻ and NO₃⁻, or mixtures thereof.

It is preferred that the solid support material has the formula I in which M is Mg, M' is Al and Xⁿ⁻ is CO₃⁻.

It is further preferred that c, in the formula I for the solid support material, is > 0 and AMO-solvent is acetone and/or methanol, preferably acetone.

It is preferred that the catalytic transition metal complex is a metallocene containing zirconium or hafnium.

The catalyst system of the present invention may be made by a process comprising treating the core@AMO-LDH, as described above, with at least one transition metal complex, as described above, having catalytic activity in the polymerisation of olefins. Typically, the treatment will be carried out in a slurry of the core@AMO-LDH in an organic solvent, for example toluene. According to this slurry process, a slurry of the core@AMO-LDH in, e.g., toluene is prepared. Separately, a solution of the catalytic transition metal complex in e.g. toluene is prepared and then added to the core@AMO-LDH containing slurry. The resulting combined mixture is then heated, for instance at 80°C, for a period of time. The solid product may then be filtered from the solvent and dried under vacuum.

Preferably, the core@ AMO-LDH is heat-treated, for instance at a temperature greater than 110°C, before it is slurried in the organic solvent.

Preferably, the heat treated material is contacted with an activator, for example an alkylaluminium activator such as methylaluminoxane, before or after being treated with the catalytic transition metal complex. Typically, methylaluminoxane is dissolved in a solvent, e.g. toluene, and the resulting solution is added to a slurry of calcined core@AMO-LDH in toluene. The slurry may then be heated, for instance at 80°C, for 1-3h prior to being filtered from the solvent and dried. According to a preferred embodiment, the core@AMO-LDH is treated with methylaluminoxane before being treated with a solution of the catalytic material.

In an embodiment, the heat treated material obtained from the thermal treatment step (b) is activated with an alkylaluminoxane or triisobutylaluminium (TIBA), triethylaluminium (TEA) or diethylaluminium chloride (DEAC). Suitably, the heat treated material obtained from the thermal treatment step (b) is activated with methylaluminoxane (MAO) or modified methylaluminoxane (MMAO).

The catalytic compounds will be present on the surface of the solid support material. For instance, they may be present on the surface as a result of adsorption, absorption or chemical interactions.

### Particularly preferred embodiments of the catalyst system

The following represent particular embodiments of the catalyst system:
1.1 The catalyst systems comprise an activated solid support material and having, on its surface, one or more catalytic transition metal complexes, wherein the catalytic transition metal complex is at least one complex of a metal selected from zirconium, iron, chromium, cobalt, nickel, titanium and hafnium, and wherein the catalytic transition metal complex comprises one or more aromatic or heteroaromatic ligands; and wherein the solid support material comprises a core@layered double hydroxide shell material having the formula IIa

   Tₚ@{[M^{z+}₍₁₋ₓ₎M'^{y+}ₓ(OH)₂]^{a+}(Xⁿ⁻)_{a/n}•bH₂O•c(AMO-solvent)}_{q} (IIa)

   wherein,
   T is a molecular sieve material selected from aluminium silicate, vanadium silicate, iron silicate, silicon-aluminium phosphate (SAPO) and aluminium phosphate (AIPO), preferably an aluminium silicate having a silicon:aluminium ratio of from 1 to 100, more preferably of 1 to 50, most preferably 1 to 40;
   M^{Z+} is selected from Li⁺, Ca²⁺, Cu²⁺, Zn²⁺, Ni²⁺ or Mg²⁺, and M'^{y+} is Al³⁺, Ga³⁺, ln³⁺, or Fe³⁺;
   0 < x < 0.9;
   b is 0 to 10;
   c is 0.01 to 10;
   p > 0,
   q > 0;
   Xⁿ⁻ is is selected from CO₃²⁻, NO₃⁻ or Cl⁻; with n > 0 (preferably 1-5)
   a = z(1-x) + xy-2; and
   the AMO-solvent is selected from ethanol, isopropanol or acetone.
1.2 The catalyst systems comprise an activated solid support material and having, on its surface, one or more catalytic transition metal complexes, wherein the catalytic transition metal complex is at least one complex of a metal selected from zirconium, iron, chromium, cobalt, nickel, titanium and hafnium, and wherein the catalytic transition metal complex comprises one or more aromatic or heteroaromatic ligands; and wherein the solid support material comprises a core@layered double hydroxide shell material having the formula IIb

   Tₚ@{[M^{z+}₍₁₋ₓ₎M'^{y+}x(OH)₂]^{a+}(Xⁿ⁻)_{a/n}•bH₂O•c(AMO-solvent)}_{q} (IIb)

   wherein,
   T is; i) an aluminium silicate with a framework structure selected from zeolite types LTA, FAU, BEA, MOR or MFI; ii) an aluminophosphate; or iii) a silicoaluminophosphate; wherein the aluminium silicate has a silicon:aluminium ratio of from 1 to 50, more preferably of 1 to 40, most preferably of 1 to 30;
   M^{Z+} is selected from Li⁺, Ca²⁺, Cu²⁺, Zn²⁺, Ni²⁺ or Mg²⁺, and M'^{y+} is Al³⁺, Ga³⁺, ln³⁺, or Fe³⁺;
   0 < x < 0.9;
   b is 0 to 10;
   c is 0.01 to 10;
   p > 0,
   q > 0;
   Xⁿ⁻ is is selected from CO₃²⁻, NO₃⁻ or Cl⁻; with n > 0 (preferably 1-5)
   a = z(1-x) + xy-2; and
   the AMO-solvent is selected from ethanol or acetone.
1.4 The catalyst systems comprise an activated solid support material and having, on its surface, one or more catalytic transition metal complexes, wherein the catalytic transition metal complex is a metallocene containing zirconium or hafnium; and
   wherein the solid support material comprises a core@layered double hydroxide shell material having the formula IIc

   Tₚ@{[M^{z+}₍₁₋ₓ₎M'^{y+}ₓ(OH)₂]^{a+}(Xⁿ⁻)_{a/n}•bH₂O•c(ethanol)}_{q} (IIc)

   wherein,
   T is; i) an aluminium silicate with a framework structure selected from zeolite types LTA, FAU, BEA, MOR or MFI; ii) an aluminophosphate; or iii) a silicoaluminophosphate; wherein the aluminium silicate has a silicon:aluminium ratio of from 1 to 50, more preferably of 1 to 40, most preferably of 1 to 30;
   M^{Z+} is selected from Li⁺, Ca²⁺, Cu²⁺, Zn²⁺, Ni²⁺ or Mg²⁺, and M'^{y+} is Al³⁺, Ga³⁺, ln³⁺, or Fe³⁺;
   0 < x < 0.9;
   b is 0 to 10;
   c is 0.01 to 10;
   p > 0,
   q > 0;
   Xⁿ⁻ is is selected from CO₃ ²⁻, NO₃⁻ or Cl⁻; with n > 0 (preferably 1-5)
   a = z(1-x) + xy-2.
1.5 The catalyst systems comprise an activated solid support material and having, on its surface, one or more catalytic transition metal complexes, wherein the catalytic transition metal complex is selected from one of the following: 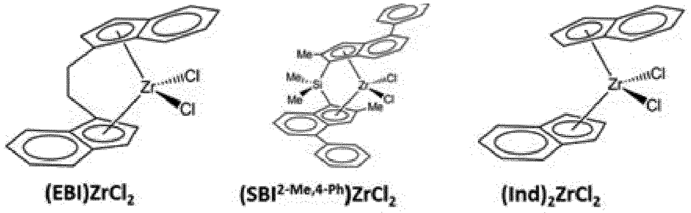 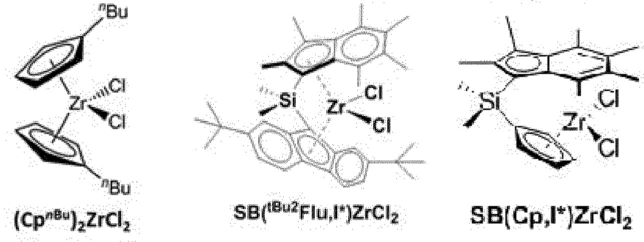 and wherein the solid support material comprises a core@layered double hydroxide shell material having the formula IId

   Tₚ@{[M^{z+}₍₁₋ₓ₎M'^{y+}ₓ(OH)₂]^{a+}(Xⁿ⁻)_{a/n}•bH₂O•c(ethanol)}_{q} (Id)

   wherein,
   T is; i) an aluminium silicate with a framework structure selected from zeolite types LTA, FAU or MFI; ii) an aluminophosphate; or iii) a silicoaluminophosphate; wherein the aluminium silicate has a silicon:aluminium ratio of from 1 to 50, more preferably of 1 to 40, most preferably of 1 to 30;
   M^{Z+} is selected from Li⁺, Ca²⁺, Ni²⁺ or Mg²⁺, and M'^{y+} is Al³⁺ or Fe³⁺;
   0 < x < 0.9;
   b is 0 to 10;
   c is 0.01 to 10;
   p > 0,
   q > 0;
   Xⁿ⁻ is is selected from CO₃²⁻ or NO₃⁻; with n > 0 (preferably 1-5)
   a = z(1-x) + xy-2

### Applications

The catalyst systems of the present invention may be used in the polymerisation of olefins, in particular ethylene.

Thus, according to a further aspect of the present invention, there is provided a use of the inventive catalyst system in combination with a suitable scavenger as a catalyst in the polymerisation and/or copolymerisation of at least one olefin for producing a homopolymer and/or copolymer, preferably comprising 1 to 10 wt% of a (4-8C)-α-olefin.

The present invention also provides a process for producing a polymer of an olefin which comprises contacting the olefin, preferably ethylene, with a catalyst system according to the invention, as described above.

Thus, as discussed hereinbefore, the present invention also provides the use of a composition defined herein as a polymerisation catalyst, preferably to produce polyethylene.

In one embodiment, the polyethylene is a homopolymer made from polymerized ethene monomers.

In another embodiment, the polyethylene is a copolymer made from polymerized ethene monomers comprising 1-10 wt% of (4-8C) α-olefin (by total weight of the monomers). Suitably, the (4-8C) α-olefin is 1-butene, 1-hexene, 1-octene, or a mixture thereof.

It will be appreciated that any suitable scavenger may be used in combination with the catalyst system in the polymerisation and/or copolymerisation of at least one olefin for producing a homopolymer and/or copolymer. Suitably, the scavenger is selected from an alkylaluminoxane, triisobutylaluminium (TIBA), triethylaluminium (TEA) or diethylaluminium chloride (DEAC). More suitably, the scavenger is selected from methylaluminoxane (MAO), modified methylaluminoxane (MMAO), triisobutylaluminium (TIBA), triethylaluminium (TEA) or diethylaluminium chloride (DEAC). Most suitably, the scavenger is selected from methylaluminoxane (MAO) or modified methylaluminoxane.

As discussed hereinbefore, the present invention also provides a process for preparing (forming) a polyolefin (e.g. a polyethylene) which comprises reacting olefin monomers in the presence of a composition (catalyst system) defined herein.

In another embodiment, the olefin monomers are ethene monomers.

In another embodiment, the olefin monomers are ethene monomers comprising 1-10 wt% of (4-8C) α-olefin (by total weight of the monomers). Suitably, the (4-8C) α-olefin is 1-butene, 1-hexene, 1-octene, or a mixture thereof.

A person skilled in the art of olefin polymerisation will be able to select suitable reaction conditions (e.g. temperature, pressures, reaction times etc.) for such a polymerisation reaction. A person skilled in the art will also be able to manipulate the process parameters in order to produce a polyolefin having particular properties.

In a particular embodiment, the polyolefin is polyethylene.

Finally, it is preferred that the process is performed at a temperature of 50 to 100°C, preferably 60 to 100°C, more preferably 70 to 80°C.

### FIGURES

- Figure 1.: TEM images of (a) zeolite HY5.1 and (b) HY5.1 @ AMO-LDH
- Figure 2.: Thermal analysis data for the zeolite@layered double hydroxide shell material (HY5.1 @ AMO-LDH) showing the thermal events on heating.
Left - Thermogravimetric Analysis (TGA), where (a) is HY 5.1, (b) is HY 5.1@LDA-A and (c) is LDH-A.
Right - derivative Thermogravimetric Analysis (dTGA), where (a) is HY 5.1, (b) is HY 5.1 @LDA-A and (c) is LDH-A.
LDH-A denotes AMO-synthesised LDH using acetone treatment.
- Figure 3.: Pore size distribution of HY5.1 and HY5.1 @ AMO-LDH after calcination at 300°C, where (a) is HY5.1 and (b) is HY5.1@LDH-A and LDH-A denotes AMO-synthesised LDH.
- Figure 4.: TEM images of HY5.1 @ LDH top shows water-washed product bottom shows acetone-washed product LDH-W denotes conventionally-synthesised LDH, LDH-A denotes AMO-synthesized LDH.
- Figure 5.: X-ray powder diffraction of HY5.1 @ LDH
Left - a comparison with starting material, where (a) is HY5.1, (b) is HY5.1@LDH-A and (c) is LDH-A.
Right - a comparison between water- and acetone-washed samples, where (a) is HY5.1@LDH-W and (b) is HY5.1@LDH-A. LDH-W denotes conventionally synthesised LDH, LDH-A denotes AMO-synthesised LDH.
- Figure 6.: Thermal analysis data for the zeolite@layered double hydroxide shell material, HY5.1 @ LDH, showing the thermal events on heating.
Left - Thermogravimetric Analysis (TGA), where the solid line is HY(5.1)@LDH-W and the dashed line is HY(5.1)@LDH-A.
Right - derivative Thermogravimetric Analysis (dTGA), where the solid line is HY(5.1)@LDH-W and the dashed line is HY(5.1)@LDH-A.
LDH-W denotes conventionally-synthesised LDH, LDH-A denotes AMO-synthesised LDH with acetone treatment.
- Figure 7.: TEM images of HY @ AMO-LDH.
AMOST method treatment using acetone as the AMO solvent.
- Figure 8.: TEM images of HY30 @ AMO-LDH.
AMOST method treatment using acetone as the AMO solvent.
- Figure 9.: TEM images of HY15 @ AMO-LDH.
AMOST method treatment using acetone as the AMO solvent.
- Figure 10.: TEM images of ZSM5 @ AMO-LDH.
AMOST method treatment using acetone as the AMO-solvent.
- Figure 11.: TEM images of ZSM5-23 @ LDH at a rate of 60 ml/hr drop rate.
- Figure 12.: TEM images of ZSM5-40 @ LDH at rates of 60 ml/hr, 40ml/hr and 20 ml/hr drop rates.
- Figure 13.: Thermal analysis data for the zeolite@layered double hydroxide shell material, ZSM5-23 @ LDH, showing the thermal events on heating.
Left - Thermogravimetric Analysis (TGA), where the solid line is LDH-A, the dashed line is ZSM-5(23)@LDH-A and the dotted line is ZSM-5(23).
Right - derivative Thermogravimetric Analysis (dTGA), where the solid line is LDH-A, the dashed line is ZSM-5(23)@LDH-A and the dotted line is ZSM-5(23).
AMOST method treatment using acetone as the AMO-solvent. LDH-A denotes AMO-synthesised LDH using acetone treatment.
- Figure 14.: Thermal analysis data for the zeolite@layered double hydroxide shell material, ZSM5-23 @ LDH,
Left - acetone-washed, where the squared line is ZSM-5(23), the circled line is ZSM-5(23)@LDH-A and the triangular line is LDH-A.
Right - water-washed, where the squared line is ZSM-5(23), the circled line is ZSM-5(23)@LDH-W and the triangular line is LDH-W
LDH-A denotes AMO-synthesised LDH using acetone treatment and LDH-W denotes conventionally synthesised LDH.
- Figure 15.: Represents the different BET values at various calcination temperatures using HY5.1 @ LDH demonstrating no particular change.
- Figure 16.: TEM image of HY5.1@Mg₂Al-NO₃ LDH-A. LDH-A denotes AMO-synthesised LDH,
Left - 1 µm scale zoom
Right - 500 nm scale zoom.
- Figure 17.: X-Ray powder diffraction of HY5.1 @Mg₂Al-NO₃ LDH-A. LDH-A denotes AMO-synthesised LDH.
- Figure 18.: Thermogravimetric Analysis (TGA) of (a) HY5.1, (b) HY5.1 @ Mg₂Al-NO₃ LDH-A and (c) LDH-A. LDH-A denotes AMO-synthesised LDH.
- Figure 19.: Two TEM images of HY5.1 @ Mg₂Al_{0.8}Fe_{0.2}-CO₃ LDH-A. LDH-A denotes AMO-synthesised LDH.
- Figure 20.: X-Ray powder diffraction of HY5.1@ Mg₂Al_{0.8}Fe_{0.2}-CO₃ LDH-A. LDH-A denotes AMO-synthesised LDH.
- Figure 21.: Thermogravimetric Analysis (TGA) of (a) HY5.1, (b) HY5.1@ Mg₂Al_{0.8}Fe_{0.2}-CO₃ LDH-A and (c) LDH-A. LDH-A denotes AMO-synthesised LDH.
- Figure 22.: Two TEM images of HY5.1@ Mg_{1.8}AlNi_{0.2}-CO₃ LDH-A. LDH-A denotes AMO-synthesised LDH.
- Figure 23.: X-Ray powder diffraction of HY5.1@ Mg_{1.8}AlNi_{0.2}-CO₃ LDH-A. LDH-A denotes AMO-synthesised LDH.
- Figure 24.: Thermogravimetric Analysis (TGA) of (a) HY5.1, (b) HY5.1@ Mg_{1.8}AlNi_{0.2}-CO₃ LDH-A and (c) LDH-A. LDH-A denotes AMO-synthesised LDH.
- Figure 25.: X-Ray powder diffraction of MSN@LDH (a) MCM-41@AMO-LDH (b) SBA-15@AMO-LDH.
- Figure 26.: TEM images of (a, b) MCM-41@AMO-LDH and (c, d) SBA-15@AMO-LDH.
- Figure 27.: X-Ray powder diffraction of Microporous Aluminophosphate @LDH: (a)ALPO-5@AMO-LDH, (b)SAPO-5@AMO-LDH.
- Figure 28.: Two TEM images of SAPO-5@AMO-LDH.
- Figure 29.: Two TEM images of ALPO-5@AMO-LDH.
- Figure 30.: Ethylene polymerisation data using HY5.1 @LDH/MAO/(EBI)ZrCl₂ (square), LDH/MAO/(EBI)ZrCl₂ (triangle) and pure HY5.1/MAO/(EBI)ZrCl₂ (circle).
- Figure 31.: Ethylene polymerisation data using ZSM5-23@LDH/MAO/(EBI) (square), LDH/MAO/(EBI)ZrCl₂ (triangle), ZSM5-23/MAO/(EBI) ZrCl₂ (circle).

### EXAMPLES

### Experimental Methods

### 1. General Details

### 1.1 Powder X-Ray Diffraction

Powder X-ray diffraction (XRD) data were collected on a PANAnalytical X'Pert Pro diffractometer in reflection mode and a PANAnalytical Empyrean Series 2 at 40 kV and 40 mA using Cu Kα radiation (α1 = 1.54057 Å , α2 = 1.54433 Å, weighted average = 1.54178 Å). Scans were recorded from 5° ≤ 0 ≤ 70° with varying scan speeds and slit sizes. Samples were mounted on stainless steel sample holders. The peaks at 43-44° are produced by the XRD sample holder and can be disregarded.

### 1.2 Thermogravimetric Analysis

Thermogravimetric analysis (TGA) measurements were collected using a Netzsch STA 409 PC instrument. The sample (10-20mg) was heated in a corundum crucible between 30°C and 800°C at a heating rate of 5°C min⁻¹ under a flowing stream of nitrogen.

### 1.3 Transmission Electron Microscopy

Transmission Electron Microscopy (TEM) analysis was performed on a JEOL 2100 microscope with an accelerating voltage of 200 kV. Particles were dispersed in water or ethanol with sonication and then cast onto copper grids coated with carbon film and left to dry.

### 1.4 Brunauer-Emmett-Teller Surface Area Analysis

Brunauer-Emmett-Teller (BET) specific surface areas were measured from the N₂ adsorption and desorption isotherms at 77 K collected from a Quantachrome Autosorb surface area and pore size analyser.

### General Method of Synthesis of catalyst support material

Zeolite (100 mg) was dispersed in deionised water (20 mL) using ultrasound treatment. After 30 minutes, the sodium carbonate was added to the solution and a further 6 minutes of sonication was carried out to form solution A. An aqueous solution (19.2 mL) containing magnesium nitrate hexahydrate and aluminium nitrate nonahydrate was added at a rate of 60 mL/h to solution A under vigourous stirring. The pH of the reaction solution was controlled with the addition of 1 M NaOH by an autotitrator. The obtained suspension was stirred for 1h. The obtained solid was collected and then re-dispersed in deionised water (40 mL) and stirred for 1h. The collection and re-dispersion was repeated once. The samples (Zeolite@LDH) were then dried under vacuum. The Zeolite@AMO-LDH was synthesized using the same procedure. However, before final isolation, the solid was treated with AMOST method, which was washed with acetone (40 mL) and then re-dispersed in acetone (40 mL) under stirring for overnight. The solid was then dried under vacuum for materials characterization.

Using this general method, zeolite@LDH shell materials were synthesised using the different zeolite types HY5.1, HY30, HY15, ZSM5, ZSM5-23 and ZSM5-40.

The zeolite@LDH shell materials obtained using these different zeolite types were characterised and/or studied according to the following.

### Characterisation of HY5.1@LDH

The zeolite HY5.1 was used to attempt the synthesis of the first Zeolite@AMO-LDH. Figures 1 and 2 highlight the synthesis and characterisation of HY5.1@AMO-LDH. Acetone was used as the AMO-solvent. The AMO-LDH can fully coat the surface of HY5.1 with open hierarchical structure. The content of LDH is around 61.5% according to the TGA result. After thermal treatment at 300°C, the total surface area of HY5.1@AMO-LDH is similar to that of pure HY5.1 as shown in Table 1. The external surface area increased close to three times (70 to 201 m²/g) and the accumulate volume increased from 0.07 to 0.66 cc/g. While the micropore surface area dropped from 625 to 497 m²/g.

### Comparison between HY5.1@AMO-LDH and HY5.1@LDH

A similar procedure was used to synthesise and characterise zeolite core-shell material using conventionally synthesised LDH, HY5.1@LDH, Figure 4. The morphology of HY5.1@LDH-W and HY5.1@LDH-A are similar.

Figure 5 and Figure 6 are the XRD and TGA results from conventional and AMO-synthesised HY5.1@LDH. Both samples show similar crystallinity and weight loss.

### Variation of Si/AI ratio in HY@AMO-LDH

Figure 7 shows the increased affinity for LDH with increased aluminium content, providing a better Al³⁺ source for LDH growth.

### Variation of other parameters using HY30@LDH

The coating of LDH on the HY30 surface did not increase by changing temperature and Mg/AI ratio. However, a change in pH and Na₂CO₃ soaking time demonstrated a small improvement in affinity of LDH on the surface.

### Variation of Zeolite to LDH ratio in HY15@AMO-LDH

Figure 9 shows that for HY15, 200mg seems to possess the best coating of the three. 90% of HY15 has been coated with dense LDH layer when using 200mg.

### Variation of Si/AI ratio in ZSM5@LDH

LDH can easily grow on the surface of ZSM5 regardless of the Si/AI ratio.

### Variation of Zeolite to LDH ratio in ZSM5-23@LDH

By increasing the amount of ZSM5-23, the free LDH was reduced. However, less ZSM5 was coated with LDH.

### Variation of the drop rate in ZSM5-40@LDH

Change in the drop rate has no significant effect.

### Characterisation of ZSM5-23@AMO-LDH

Figure 13 shows around 50% LDH in the sample ZSM5-23@AMO-LDH.

**Table 1. Summary data from N2 adsorption and desorption**

| **Samples** | **BET SSA (m²/g)** | **External SSA (m²/g)** | **Micropore SSA (m²/g)** | **Micropore volume (cc/g)** | **Cumulative Volume (cc/g)** |
|---|---|---|---|---|---|
| HY5.1 | 813 | 72 | 740 | 0.28 | 0.08 |
| HY5.1@LDH-W | 565 | 164 | 401 | 0.17 | 0.60 |
| HY5.1@LDH-W | 698 | | 497 | | |
| LDH-W | 11 | 0.4 | 11 | 0.004 | 0.04 |
| LDH-A | 281 | 252 | 29 | 0.01 | 1.08 |
| ZSM5-23 | 424 | 45 | 379 | 0.15 | 0.05 |
| ZSM5-23@LDH-W | 167 | 54 | 113 | 0.04 | 0.33 |
| ZSM5-23@LDH-A | 339 | 140 | 199 | 0.08 | 0.05 |
| HY5.1 300°C | 695 | 70 | 625 | 0.30 | 0.07 |
| HY5.1 @LDH-A 300°C | 698 | 201 | 497 | 0.23 | 0.66 |

| | | | | | |
|---|---|---|---|---|---|
| LDH-W means the LDH was prepared by the conventional method in water. LDH-A means the LDH was treated with acetone. | | | | | |

Figure 15 represents the different BET values at various calcination temperatures using HY5.1@LDH demonstrating no particular change.

### FURTHER CORE @ LAYERED DOUBLE HYDROXIDE SHELL MATERIALS

### Variation of the anion of the LDH

### Example method of HY5.1@Mg₂Al-NO₃ LDH-A

HY5.1 (100 mg) was dispersed in deionised water (20 mL) using ultrasound treatment. After 36 minutes, an aqueous solution (19.2 mL) containing magnesium nitrate hexahydrate and aluminium nitrate nonahydrate was added at a rate of 60 mL/h to HY5.1 solution under vigour stirring. The pH of the reaction solution was controlled to 10 with the addition of 1 M NaOH by an autotitrator. The obtained suspension was stirred for 1h. The obtained solid was collected and then re-dispersed in deionised water (40 mL) and stirred for 1 h. The collection and re-dispersion was repeated once. The solid was treated with AMOST method, which was washed with acetone (40 mL) and then re-dispersed in a fresh acetone (40 mL) under stirring for overnight. The solid was then dried under vacuum oven for materials characterization.

### Characterisation

### HY5.1@Mg₂Al-NO₃ LDH

The same synthesis method is applied to LDH-NO₃. The TEM (Figure 16) show that the Mg₂Al-NO₃ LDH-A can grow on the surface of HY5.1. However, the amount of LDH on the surface is less, compared to LDH-CO₃ when using the same conditions. The XRD (Figure 17) indicates that HY5.1@ Mg₂Al-NO₃ LDH-A has both characterization peaks of HY5.1 and LDH. TGA (Figure 18) shows that HY5.1@ Mg₂Al-NO₃ LDH-A exhibits the typical three decompose stage of LDH.

### Variation of the metal of the LDH

### Example method of HY5.1@ Mg₂Al_{0.8}Fe_{0.2}-CO₃ LDH-A

HY5.1 (100 mg) was dispersed in deionised water (20 mL) using ultrasound treatment. After 36 minutes, an aqueous solution (19.2 mL) containing magnesium nitrate hexahydrate, iron nitrate nonahydrate and aluminium nitrate nonahydrate (Mg:AI:Fe 2:0.8:0.2) was added at a rate of 60 mL/h to HY5.1 solution under vigour stirring. The pH of the reaction solution was controlled to 10 with the addition of 1 M NaOH by an autotitrator. The obtained suspension was stirred for 1h. The obtained solid was collected and then re-dispersed in deionised water (40 mL) and stirred for 1 h. The collection and re-dispersion was repeated once. The solid was treated with AMOST method, which was washed with acetone (40 mL) and then re-dispersed in a fresh acetone (40 mL) under stirring for overnight. The solid was then dried under vacuum oven for materials characterization.

### Characterisation

### HY5.1 @Mg₂Al_{0.}8Fe_{0.2}-CO₃ LDH

The TEM (Figure 19) show that the Mg₂Al_{0.8}Fe_{0.2}-CO₃ LDH can grow on the surface of HY5.1. The XRD (Figure 20) indicates that HY5.1@ Mg₂Al_{0.8}Fe_{0.2}-CO₃ LDH-A has both characterization peaks of HY5.1 and LDH. TGA (Figure 21) shows that HY5.1@ Mg₂Al_{0.8}Fe_{0.2}-CO₃ LDH-A exhibits the typical three decompose stage of LDH.

### Example method of HY5.1@ Mg1.8ALNi_{0.2}-CO₃ LDH-A

HY5.1 (100 mg) was dispersed in deionised water (20 mL) using ultrasound treatment. After 36 minutes, an aqueous solution (19.2 mL) containing magnesium nitrate hexahydrate, nickel nitrate hexahydrate and aluminium nitrate nonahydrate (Mg:AI:Ni 1.8:1:0.2) was added at a rate of 60 mL/h to HY5.1 solution under vigour stirring. The pH of the reaction solution was controlled to 10 with the addition of 1 M NaOH by an autotitrator. The obtained suspension was stirred for 1h. The obtained solid was collected and then re-dispersed in deionised water (40 mL) and stirred for 1 h. The collection and re-dispersion was repeated once. The solid was treated with AMOST method, which was washed with acetone (40 mL) and then re-dispersed in a fresh acetone (40 mL) under stirring for overnight. The solid was then dried under vacuum oven for materials characterization.

### Characterisation

### HY5.1@Mg_{1.8}ALNi_{0.2}-CO₃ LDH

The TEM (Figure 22) show that the Mg_{1.8}AlNi_{0.2}-CO₃ LDH-A can grow on the surface of HY5.1. The XRD (Figure 23) indicates that HY5.1 @ Mg_{1.8}AlNi_{0.2}-CO₃ LDH-A has both characterization peaks of HY5.1 and LDH. TGA (Figure 24) shows that HY5.1@ Mg_{1.8}AlNi_{0.2}-CO₃ LDH-A exhibits the typical three decompose stage of LDH.

### Reference mesoporous silica based materials

### Example method of MSN@ Mg₃Al-CO₃ LDH

Generally, MCM-41 (50 mg) was dispersed in deionised water (20 mL) using ultrasound treatment. After 30 minutes, the sodium carbonate was added to the solution and a further 6 minutes of sonication was carried out to form solution A. An aqueous solution (19.2 mL) containing magnesium nitrate hexahydrate and aluminium nitrate nonahydrate was added at a rate of 60 mL/h to solution A under vigorous stirring. The pH of the reaction solution was controlled with the addition of 1 M NaOH by an autotitrator. The obtained suspension was stirred for 1 h. The obtained solid was collected and then re-dispersed in deionised water (40 mL) and stirred for 1 h. The collection and re-dispersion was repeated once. Before final isolation, the solid was treated with AMOST method, which was washed with acetone (40 mL) and then re-dispersed in acetone (40 mL) under stirring for overnight. The samples (MCM-41@AMO-LDH) were then dried under vacuum. The other reference MSN@AMO-LDH (such as SBA-15@AMO-LDH) was synthesized using the same procedure.

### Characterisation

### MSN@Mg₃Al-CO₃ LDH

According to X-ray diffraction (XRD) pattern (Figure 25) of MSN@LDH, the core of MCM-41 has a mean pore diameter about 3 nm and SBA-15 has a mean pore diameter about 9 nm. The XRD pattern of low angle (Figure S25 inset) showed that the samples had an high ordered hexagonal structure and high crystallinity, these Bragg peaks can be indexed as (100), and overlapped (110) of the two-dimensional hexagonal mesostructure (space group p6m). Since MCM-41 and SBA-15 consists of amorphous silica, it has no crystallinity at the atomic level. Therefore, only the typical peaks of LDH have been observed at higher degrees. We can observe from the TEM images (Figure 26) that LDH-nanosheet can grow on the Mesoporous Silica Nanoparticles surface.

### Microporous molecular sieves @ LDH

### Example method of ALPO-5/SAPO-5@LDH

Generally, ALPO-5(100 mg) was dispersed in deionised water (20 mL) using ultrasound treatment. After 30 minutes, the sodium carbonate was added to the solution and a further 6 minutes of sonication was carried out to form solution A. An aqueous solution (19.2 mL) containing magnesium nitrate hexahydrate and aluminium nitrate nonahydrate was added at a rate of 60 mL/h to solution A under vigorous stirring. The pH of the reaction solution was controlled with the addition of 1 M NaOH by an autotitrator. The obtained suspension was stirred for 1 h. The collection and re-dispersion was repeated once. Before final isolation, the solid was treated with AMOST method, which was washed with acetone (40 mL) and then re-dispersed in acetone (40 mL) under stirring for overnight. The samples (ALPO-5@AMO-LDH) were then dried under vacuum. The SAPO-5@AMO-LDH was synthesized using the same procedure.

### SAPO5@Mg₃Al-CO₃ LDH & ALPO5@Mg₃Al-CO₃ LDH

XRD (Figure 27) shows typical peaks of ALPO-5/SAPO-5 which is an AFI-type. On the other hand, typical peaks of LDH have been also observed at higher degrees. TEM images (Figure 28 and 29) show that LDH can grow on the surface of ALPO and SAPO. However, the thickness is depended on the composites of materials and synthesis method. For example, ALPO with higher Al content could have thicker layer of LDH, comparing SAPO.

### Polymerisation of ethylene using Zeolite@LDH

### Synthesis of ZSM5-23/MAO and ZSM5-23@LDH/MAO

A sample of ZSM5-23@LDH, prepared as described above, was thermally treated at 150°C for 6h before being reacted with methylaluminoxane (MAO) in a 2:1 ratio (support: MAO) in toluene at 80°C for 2h. The solvent was removed under vacuum to give ZSM5-23@LDH/MAO as a free-flowing colourless powder.

A sample of the zeolite ZSM5-23 was also thermally treated and then reacted with MAO, according to the procedure described above. Following removal of the solvent, the solid product ZSM5-23/MAO was obtained.

### Synthesis of catalysts based on ZSM5-23

The ZSM5-23@LDH/MAO, obtained as described above, was reacted with *rac-*(EBI)ZrCl₂ in a 200:1 ratio (support/MAO : (EBI)ZrCl₂) in toluene. The reaction was carried out at 60°C for 1h. After removing the solvent, the beige solid product ZSM5-23@LDH/MAO/(EBI)ZrCl₂ was obtained. The same process was carried out with the ZSM5-23/MAO to give ZSM5-23/MAO/(EBI)ZrCl₂.

In addition, the same process was carried out using, as support, LDH/MAO to give the product LDH/MAO/(EBI)ZrCl₂.

### Ethylene Polymerisation Studies

The catalysts were tested for their ability to act as a catalyst for ethylene polymerisation under slurry conditions in the presence of TIBA (TIBA)o/[Zr]o = 1000). The reactions were performed with ethylene (2 bar) in a 200 mL ampoule, with the catalyst precursor (10 mg) suspended in hexane (50 mL). The reactions were run for 15-120 minutes at 50-90°C controlled by heating in an oil bath. The polyethylene product was washed with pentane (3 x 50mL) and the resulting polyethylene was filtered through a sintered glass frit.

The polymerisation activity of the catalyst supported metallocene complexes plotted against temperature is shown in Figure 30 and Figure 31.

Figure 31 shows that ZSM5-23@LDH/MAO/(EBI)ZrCl₂ is better than ZSM5-23/MAO/(EBI)ZrCl₂ and LDH/MAO/(EBI)ZrCl₂. Furthermore, there is the same tendency to go higher in activity with higher temperature.

Catalysts were also produced using the zeolite HY5.1 according to the processes described above. Each of these catalysts, HY5.1 @LDH/MAO/ (EBI)ZrCl₂, LDH/MAO/(EBI)ZrCl₂ and pure HY5.1/MAO/(EBI)ZrCl₂, was also tested for its ability to act as a catalyst for ethylene polymerisation as described above. The polymerisation activities of these plotted against temperature are shown in Figure 30. In this Figure, it is shown that when the coverage of the zeolite@LDH is too complete, the HY5.1 @LDH/MAO/(EBI) ZrCl2 acts similarly as LDH/MAO/(EBI)ZrCl₂ and is lower than pure HY5.1/MAO/(EBI)ZrCl₂.

## Claims

1. A catalyst system comprising an activated solid support material and having, on its surface, one or more catalytic transition metal complex, wherein the solid support material comprises a core@layered double hydroxide shell material having the formula I
Tₚ@{[M^{z+}₍₁₋ₓ₎M'ₓ^{y+}(OH)₂]^{a+}(Xⁿ⁻)_{a/n}•bH₂O•c(AMO-solvent)}_{q} (I)
wherein T is a solid, porous, inorganic oxide-containing framework material, M^{z+} and M'^{y+} are independently selected charged metal cations; M^{z+} is a metal cation of charge z or a mixture of two or more metal cations each independently having the charge z; M'^{y+} is a metal cation of charge y or a mixture of two or more metal cations each independently having the charge y;
z = 1 or 2;
y = 3 or 4;
0 < x < 0.9;
b is 0 to 10;
c is 0.01 to 10;
p > 0;
q > 0;
Xⁿ⁻ is an anion; with n > 0;
a = z(1-x) + xy-2; and
AMO-solvent is an organic solvent which is completely miscible with water;
wherein:
T is a molecular sieve material selected from aluminium silicate, vanadium silicate, iron silicate, silicon-aluminium phosphate (SAPO) and aluminium phosphate (AIPO);
the AMO-solvent is selected from acetone, methanol, ethanol or isopropanol; and
the catalytic transition metal complex is at least one complex of a metal selected from zirconium, iron, chromium, cobalt, nickel, titanium and hafnium, the complex containing one or more aromatic or heteroaromatic ligands.

2. The catalyst system according to claim 1, wherein M' is Al, and/or M is Li, Mg or Ca and/or Xⁿ⁻ is selected from CO₃ ²⁻, OH⁻, F⁻, Cl⁻, Br⁻, I⁻, SO²⁻, NO₃⁻ and PO₄³⁻, preferably CO₃ ²⁻, Cl⁻ and NO₃⁻, or mixtures thereof.

3. The catalyst system according to any of claims 1 or 2, wherein the AMO-solvent is acetone or ethanol.

4. The catalyst system according to any of the preceding claims, wherein:
(i) T is an aluminium silicate having a silicon:aluminium ratio of from 1 to 100, preferably 25 to 100, more preferably 30 to 50;
(ii) the aluminium silicate has a framework structure selected from zeolite types A, X, Y, BEA, MOR and MFI, and/or the aluminium silicate has a framework structure containing non-framework organic and/or inorganic cations, wherein the non-framework organic and inorganic cations are preferably selected from NR₄⁺, where R is an optionally-substituted alkyl group, Na⁺, K⁺ and Cs⁺; or
(iii) the solid, porous, inorganic oxide-containing framework material is a zeolite selected from HY 5.1 or ZSM5-23.

5. The catalyst system according to any of the preceding claims, wherein the catalytic transition metal complex is a metallocene containing zirconium or hafnium.

6. The catalyst system according to any of the preceding claims, wherein the catalyst systems comprise an activated solid support material and having, on its surface, one or more catalytic transition metal complexes, wherein the catalytic transition metal complex is a metallocene containing zirconium or hafnium; and
wherein the solid support material comprises a core@layered double hydroxide shell material having the formula IIc
Tₚ@{[M^{z+}₍₁₋ₓ₎M'^{y+}ₓ(OH)₂]^{a+}(Xⁿ⁻)_{a/n}•bH₂O•c(ethanol)}_{q} (IIc)
wherein,
T is; i) an aluminium silicate with a framework structure selected from zeolite types LTA, FAU, BEA, MOR or MFI; ii) an aluminophosphate; or iii) a silicoaluminophosphate; wherein the aluminium silicate has a silicon:aluminium ratio of from 1 to 50, more preferably of 1 to 40, most preferably of 1 to 30;
M^{z+} is selected from Li⁺, Ca²⁺, Cu²⁺, Zn²⁺, Ni²⁺ or Mg²⁺, and M'^{y+} is Al³⁺, Ga³⁺, In³⁺, or Fe³⁺;
0 < x < 0.9;
b is 0 to 10;
c is 0.01 to 10;
p > 0,
q > 0;
Xⁿ⁻ is selected from CO₃²⁻, NO₃⁻ or Cl⁻; with n > 0 (preferably 1-5)
a = z(1-x) + xy-2.

7. The catalyst system according to any of the preceding claims, wherein activating to achieve the activated catalyst is activating the solid support material with an alkylaluminoxane, preferably methylaluminoxane (MAO) or modified methylaluminoxane (MMAO), or triisobutylaluminium (TIBA), triethylaluminium (TEA) or diethylaluminium chloride (DEAC).

8. A method of making the catalyst system according to any of the preceding claims which comprises
(a) providing a solid support material comprising a core@layered double hydroxide shell material having the formula I
Tₚ@{[M^{z+}₍₁₋ₓ₎M'ₓ^{y+}(OH)₂]^{a+}(Xⁿ⁻)_{a/n}•bH₂O•c(AMO-solvent)}_{q} (I)
wherein T is a solid, porous, inorganic oxide-containing framework material,
M^{z+} and M'^{y+} are two independently selected charged metal cations; M^{z+} is a metal cation of charge z or a mixture of two or more metal cations each independently having the charge z; M'^{y+} is a metal cation of charge y or a mixture of two or more metal cations each independently having the charge y;
z = 1 or 2;
y = 3 or 4;
0 < x < 0.9;
b is 0 to 10;
c is 0.01 to 10;
p > 0;
q > 0;
Xⁿ⁻ is an anion; with n > 0;
a = z(1-x) + xy-2; and
AMO-solvent is an organic solvent which is completely miscible with water; and
(b) thermally treating the core@layered double hydroxide shell material;
(c) activating the material obtained from the thermal treatment step (b); and
(d) treating the activated material obtained from step (c) with at least one catalytic transition metal complex having olefin polymerisation catalytic activity;
wherein:
T is a molecular sieve material selected from aluminium silicate, vanadium silicate, iron silicate, silicon-aluminium phosphate (SAPO) and aluminium phosphate (AIPO);
the AMO-solvent is selected from acetone, methanol, ethanol or isopropanol; and
the catalytic transition metal complex is at least one complex of a metal selected from zirconium, iron, chromium, cobalt, nickel, titanium and hafnium, the complex containing one or more aromatic or heteroaromatic ligands.

9. The method according to claim 8, further comprising a step of calcining the core@AMO-LDH microparticles before the treating step (b).

10. The method according to claims 8 or 9, further comprising a step of treating the calcined core@AMO-LDH microparticles with an alkylaluminoxane, preferably methylaluminoxane (MAO) and/or modified methylaluminoxane (MMAO), before the treating step (b).

11. A use of a catalyst system according to any one of claims 1 to 7 in combination with a suitable scavenger as a catalyst in the polymerisation and/or copolymerisation of at least one olefin for producing a homopolymer and/or copolymer, preferably comprising 1-10 wt% of a (4-8C) α-olefin, thereof.

12. A use of a catalyst system according to claim 11, where a suitable scavenger is an alkylaluminoxane, preferably methylaluminoxane (MAO) or modified methylaluminoxane (MMAO), or triisobutylaluminium (TIBA), triethylaluminium (TEA) or diethylaluminium chloride (DEAC).

13. A process for preparing a polyolefin homopolymer or a polyolefin copolymer which comprises reacting olefin monomers in the presence of a catalyst system according to any one of claims 1 to 7, wherein the polyolefin is preferably polyethylene and the olefin monomer is preferably ethylene.

14. A process for producing a polymer of an olefin, preferably ethylene, which comprises contacting the olefin with the solid catalyst system according to any one of claims 1 to 7.

15. The process according to claim 13 or 14, wherein the process is performed at a temperature of 50-100°C, most preferably 70 to 80°C.

## Patentansprüche

1. Katalysatorsystem, umfassend ein aktiviertes festes Trägermaterial und auf dessen Oberfläche einen oder mehrere katalytische Übergangsmetallkomplexe, wobei das feste Trägermaterial ein geschichtetes Doppelhydroxid-Kern-Schale-Material mit der Formel I umfasst
Tₚ@{[M^{z+}₍₁₋ₓ₎M'ₓ^{y+}(OH)₂]^{a+}(Xⁿ⁻)_{a/n}•bH₂O•c(AMO-Lösungsmittel)}_{q} (I),
wobei folgendes gilt: T ist ein festes, poröses, anorganisches, oxidhaltiges Gerüstmaterial,
M^{z+} und M'^{y+} sind unabhängig ausgewählte geladene Metallkationen; M^{z+} ist ein Metallkation der Ladung z oder ein Gemisch aus zwei oder mehr Metallkationen, die jeweils unabhängig die Ladung z aufweisen; M'^{y+} ist ein Metallkation der Ladung y oder ein Gemisch aus zwei oder mehr Metallkationen, die jeweils unabhängig die Ladung y aufweisen;
z = 1 oder 2;
y = 3 oder 4;
0 < x < 0,9;
b liegt zwischen 0 und 10;
c liegt zwischen 0,01 und 10;
p > 0;
q > 0;
Xⁿ⁻ ist ein Anion; mit n > 0;
a = z(1-x) + xy-2; und
das AMO-Lösungsmittel ist ein organisches Lösungsmittel, das vollständig mit Wasser mischbar ist; wobei folgendes gilt:
T ist ein molekulares Siebmaterial, das ausgewählt ist aus Aluminiumsilicat, Vanadiumsilicat, Eisensilicat, Silizium-Aluminium-Phosphat (SAPO) und Aluminiumphosphat (AIPO);
das AMO-Lösungsmittel ist ausgewählt aus Aceton, Methanol, Ethanol oder Isopropanol; und
der katalytische Übergangsmetallkomplex ist mindestens ein Komplex eines Metalls ist, das ausgewählt ist aus Zirconium, Eisen, Chrom, Kobalt, Nickel, Titan und Hafnium, wobei der Komplex einen oder mehrere aromatische oder heteroaromatische Liganden enthält.

2. Katalysatorsystem nach Anspruch 1, wobei M' Al ist, und/oder wobei M Li, Mg oder Ca ist, und/oder wobei Xⁿ⁻ ausgewählt ist aus CO₃²⁻, OH⁻, F⁻, Cl⁻, Br⁻, I⁻, SO²⁻, NO₃⁻ und PO₄³⁻, vorzugsweise CO₃²⁻, Cl⁻ und NO₃⁻, oder Gemischen davon.

3. Katalysatorsystem nach Anspruch 1 oder 2, wobei das AMO-Lösungsmittel Aceton oder Ethanol ist.

4. Katalysatorsystem nach einem der vorstehenden Ansprüche, wobei:
(i) T ein Aluminiumsilicat mit einem Silizium-Aluminium-Verhältnis von 1 zu 100, vorzugsweise 25 zu 100, darüber hinaus bevorzugt 30 zu 50 ist;
(ii) das Aluminiumsilicat eine Gerüststruktur aufweist, die ausgewählt ist aus den Zeolithtypen A, X, Y, BEA, MOR und MFI, und/oder wobei das Aluminiumsilicat eine Gerüststruktur aufweist, die organische und/oder anorganische Nicht-Gerüst-Kationen enthält, wobei die organischen und/oder anorganischen Nicht-Gerüst-Kationen vorzugsweise ausgewählt sind aus NR₄⁺, wobei R eine optional substituierte Alkylgruppe ist, Na⁺, K⁺ und Cs⁺; oder
(iii) das feste, poröse, anorganische, oxidhaltige Gerüstmaterial ein Zeolith ist, das ausgewählt ist aus HY 5.1 oder ZSM5-23.

5. Katalysatorsystem nach einem der vorstehenden Ansprüche, wobei der katalytische Übergangsmetallkomplex ein Metallocen ist, das Zirconium oder Hafnium enthält.

6. Katalysatorsystem nach einem der vorstehenden Ansprüche, wobei die Katalysatorsysteme ein aktiviertes festes Trägermaterial umfassen und auf ihrer Oberfläche einen oder mehrere katalytische Übergangsmetallkomplexe, wobei der katalytische Übergangsmetallkomplex ein Metallocen ist, das Zirconium oder Hafnium enthält; und
wobei das feste Trägermaterial ein Doppelhydroxid-Kern-Schale-Material mit der Formel IIC umfasst
Tₚ@{[M^{z+}₍₁₋ₓ₎M'^{y+}ₓ(OH)₂]^{a+}(Xⁿ⁻)_{a/n}•bH₂O•c(Ethanol)}_{q} (IIc),
wobei folgendes gilt:
T ist: i) ein Aluminiumsilicat mit einer Gerüststruktur, die ausgewählt ist aus den Zeolithtypen LTA, FAU, BEA, MOR oder MFI; ii) ein Aluminophosphat; oder iii) ein Silicoaluminophosphat; wobei das Aluminiumsilicat ein Silizium-Aluminium-Verhältnis von 1 zu 50, darüber hinaus bevorzugt von 1 zu 40, am meisten bevorzugt von 1 zu 30 aufweist;
M^{z+} ist ausgewählt aus Li⁺, Ca²⁺, Cu²⁺, Zn²⁺, Ni²⁺ oder Mg²⁺, und wobei M'^{y+} Al³⁺, Ga³⁺, In³⁺ oder Fe³⁺ ist;
0 < x < 0,9;
b liegt zwischen 0 und 10;
c liegt zwischen 0,01 und 10;
p > 0,
q > 0;
Xⁿ⁻ ist ausgewählt aus CO₃²⁻, NO₃⁻ oder Cl⁻; mit n > 0 (vorzugsweise 1-5)
a = z(1-x) + xy-2.

7. Katalysatorsystem nach einem der vorstehenden Ansprüche, wobei es sich beim Aktivieren, um den aktivierten Katalysator zu erlangen, um das Aktivieren des festen Trägermaterials mit einem Alkylaluminoxan handelt, vorzugsweise Methylaluminoxan (MAO) oder modifiziertes Methylaluminoxan (MMAO), oder Triisobutylaluminium (TIBA), Triethylaluminium (TEA) oder Diethylaluminiumchlorid (DEAC).

8. Verfahren zur Herstellung des Katalysatorsystems nach einem der vorstehenden Ansprüche, wobei das Verfahren folgendes umfasst:
(a) Bereitstellen eines festen Trägermaterials, das ein geschichtetes Doppelhydroxid-Kern-Schale-Material mit der Formel I umfasst
Tₚ@{[M^{z+}₍₁₋ₓ₎M'ₓ^{y+}(OH)₂]^{a+}(Xⁿ⁻)_{a/n}•bH₂O•c(AMO-Lösungsmittel)}_{q} (I),
wobei folgendes gilt: T ist ein festes, poröses, anorganisches, oxidhaltiges Gerüstmaterial,
M^{z+} und M'^{y+} sind unabhängig ausgewählte geladene Metallkationen; M^{z+} ist ein Metallkation der Ladung z oder ein Gemisch aus zwei oder mehr Metallkationen, die jeweils unabhängig die Ladung z aufweisen; M'^{y+} ist ein Metallkation der Ladung y oder ein Gemisch aus zwei oder mehr Metallkationen, die jeweils unabhängig die Ladung y aufweisen;
z = 1 oder 2;
y = 3 oder 4;
0 < x < 0,9;
b liegt zwischen 0 und 10;
c liegt zwischen 0,01 und 10;
p > 0;
q > 0;
Xⁿ⁻ ist ein Anion; mit n > 0;
a = z(1-x) + xy-2; und
das AMO-Lösungsmittel ist ein organisches Lösungsmittel, das vollständig mit Wasser mischbar ist; und
(b) Wärmebehandeln des geschichteten Doppelhydroxid-Kern-Schale-Materials;
(c) Aktivieren des durch den Wärmebehandlungsschritt (b) erhaltenen Materials; und
(d) Behandeln des aus Schritt (c) erhaltenen aktivierten Materials mit mindestens einem katalytischen Übergangsmetallkomplex mit katalytischer Olefinpolymerisations-Aktivität;
wobei folgendes gilt:
T ist ein molekulares Siebmaterial, das ausgewählt ist aus Aluminiumsilicat, Vanadiumsilicat, Eisensilicat, Silizium-Aluminium-Phosphat (SAPO) und Aluminiumphosphat (AIPO);
das AMO-Lösungsmittel ist ausgewählt aus Aceton, Methanol, Ethanol oder Isopropanol; und
der katalytische Übergangsmetallkomplex ist mindestens ein Komplex eines Metalls, das ausgewählt ist aus Zirconium, Eisen, Chrom, Kobalt, Nickel, Titan und Hafnium, wobei der Komplex einen oder mehrere aromatische oder heteroaromatische Liganden enthält.

9. Verfahren nach Anspruch 8, ferner umfassend einen Schritt des Kalzinierens der Kern-AMO-LDH-Mikropartikel vor dem Behandlungsschritt (b).

10. Verfahren nach Anspruch 8 oder 9, ferner umfassend einen Schritt des Behandelns der kalzinierten Kern-AMO-LDH-Mikropartikelmit einem Alkylaluminoxan, vorzugsweise Methylaluminoxan (MAO) und/oder modifiziertem Methylaluminoxan (MMAO), vor dem Behandlungsschritt (b).

11. Verwendung eines Katalysatorsystems nach einem der Ansprüche 1 bis 7 in Kombination mit einem geeigneten Scavenger als Katalysator in der Polymerisation und/oder Copolymerisation mindestens eines Olefins zur Erzeugung eines Homopolymers und/oder Copolymers, vorzugsweise umfassend 1 bis 10 Gew.-% eines (4-8C) α-Olefins davon.

12. Verwendung eines Katalysatorsystems nach Anspruch 11, wobei ein geeigneter Scavenger ein Alkylaluminoxan ist, vorzugsweise Methylaluminoxan (MAO) oder modifiziertes Methylaluminoxan (MMAO), oder Triisobutylaluminium (TIBA), Triethylaluminium (TEA) oder Diethylaluminiumchlorid (DEAC).

13. Prozess für die Erzeugung eines Polyolefin-Homopolymers oder eines Polyolefin-Copolymers, umfassend das Reagieren von Olefin-Monomeren in Gegenwart eines Katalysatorsystems nach einem der Ansprüche 1 bis 7, wobei das Polyolefin vorzugsweise Polyethylen ist, und wobei das Olefin-Monomer vorzugsweise Ethylen ist.

14. Prozess zur Erzeugung eines Polymers eines Olefins, vorzugsweise Ethylen, umfassend das Inkontaktbringen des Olefins mit dem festen Katalysatorsystem nach einem der Ansprüche 1 bis 7.

15. Prozess nach Anspruch 13 oder 14, wobei der Prozess bei einer Temperatur von 50 bis 100 °C, darüber hinaus bevorzugt von 70 bis 80 °C durchgeführt wird.

## Revendications

1. Système catalytique comprenant un matériau de support solide activé et ayant, sur sa surface, au moins un complexe de métal de transition catalytique, le matériau de support solide comprenant un matériau à noyau-enveloppe d'hydroxyde double stratifié ayant la formule I
Tₚ@{[M^{z+}₍₁₋ₓ₎M'ₓ^{y+}(OH)₂]^{a+}(Xⁿ⁻)_{a/n}•bH₂O•c(AMO-solvant)}_{q} (I)
T étant un matériau de cadre solide, poreux, contenant un oxyde inorganique,
M^{z+} et M'^{y+} étant des cations métalliques chargés choisis indépendamment ; M^{z+} étant un cation métallique de charge z ou un mélange d'au moins deux cations métalliques ayant chacun indépendamment la charge z ; M'^{y+} étant un cation métallique de charge y ou un mélange d'au moins deux cations métalliques ayant chacun indépendamment la charge y ;
z = 1 ou 2 ;
y = 3 ou 4 ;
0 < x < 0,9 ;
b étant compris entre 0 et 10 ;
c étant compris entre 0,01 et 10 ;
p > 0 ;
q > 0;
Xⁿ⁻ étant un anion ; avec n > 0 ;
a = z(1-x) + xy-2 ; et
l'AMO-solvant étant un solvant organique qui est complètement miscible à l'eau ;
T étant un matériau de tamis moléculaire choisi parmi le silicate d'aluminium, le silicate de vanadium, le silicate de fer, le phosphate de silicium-aluminium (SAPO) et le phosphate d'aluminium (AIPO) ;
l'AMO-solvant étant choisi parmi l'acétone, le méthanol, l'éthanol ou l'isopropanol ; et
le complexe de métal de transition catalytique étant au moins un complexe d'un métal choisi parmi le zirconium, le fer, le chrome, le cobalt, le nickel, le titane et le hafnium, le complexe contenant au moins un ligand aromatique ou hétéroaromatique.

2. Système catalytique selon la revendication 1, M' étant Al, et/ou M étant Li, Mg ou Ca et/ou Xⁿ⁻ étant choisi entre CO₃²⁻, OH⁻, F⁻, Cl⁻, Br⁻, I⁻, SO²⁻, NO₃⁻ et PO₄³⁻, de préférence CO₃²⁻, Cl⁻ et NO₃⁻, ou des mélanges associés.

3. Système catalytique selon l'une quelconque des revendications 1 ou 2, l'AMO-solvant étant de l'acétone ou de l'éthanol.

4. Système catalytique selon l'une quelconque des revendications précédentes,
(i) T étant un silicate d'aluminium ayant un rapport silicium:aluminium compris entre 1 et 100, de préférence compris entre 25 et 100, de préférence encore compris entre 30 et 50 ;
(ii) le silicate d'aluminium ayant une structure de cadre choisie parmi les types de zéolithe A, X, Y, BEA, MOR et MFI, et/ou le silicate d'aluminium ayant une structure de cadre contenant des cations organiques et/ou inorganiques sans cadre, les cations organiques et inorganiques sans cadre étant de préférence choisis parmi NR₄⁺, R étant un groupe alkyle éventuellement substitué, Na⁺, K⁺ et Cs⁺ ; ou
(iii) le matériau de cadre solide, poreux, contenant de l'oxyde inorganique étant une zéolite choisie parmi HY 5.1 ou ZSM5-23.

5. Système catalytique selon l'une quelconque des revendications précédentes, le complexe de métal de transition catalytique étant est un métallocène contenant du zirconium ou de l'hafnium.

6. Système catalytique selon l'une quelconque des revendications précédentes, les systèmes catalytiques comprenant un matériau de support solide activé et ayant, sur sa surface, au moins un complexe de métal de transition catalytique, le complexe de métal de transition catalytique étant un métallocène contenant du zirconium ou de l'hafnium ; et
le matériau de support solide comprenant un matériau à noyau-enveloppe d'hydroxyde double stratifié ayant la formule IIc
Tₚ@{[M^{z+}₍₁₋ₓ₎M'^{y+}ₓ(OH)₂]^{a+}(Xⁿ⁻)_{a/n•}bH₂O•c(éthanol)}_{q} (IIc)
T étant : i) un silicate d'aluminium avec une structure de cadre choisie parmi les types de zéolithes LTA, FAU, BEA, MOR ou MFI ; ii) un aluminophosphate ; ou iii) un silicoaluminophosphate ; le silicate d'aluminium ayant un rapport silicium:aluminium compris entre 1 et 50, de préférence encore compris entre 1 et 40, mieux encore compris entre 1 et 30 ;
M^{z+} étant choisi entre Li⁺, Ca²⁺, Cu²⁺, Zn²⁺, Ni²⁺ ou Mg²⁺, et M'^{y+} étant Al³⁺, Ga³⁺, In³⁺ , ou Fe³⁺ ;
0 < x < 0,9 ;
b étant compris entre 0 et 10 ;
c étant compris entre 0,01 et 10 ;
p > 0,
q>0;
Xⁿ⁻ est choisi parmi CO₃²⁻, NO₃⁻ ou Cl⁻ ; avec n > 0 (de préférence 1-5)
a = z(1-x) + xy-2.

7. Système catalytique selon l'une quelconque des revendications précédentes, l'activation pour obtenir le catalyseur activé consistant à activer le matériau de support solide avec un alkylaluminoxane, de préférence du méthylaluminoxane (MAO) ou du méthylaluminoxane modifié (MMAO) ou du triisobutylaluminium (TIBA), du triéthylaluminium (TEA) ou du chlorure de diéthyaluminium (DEAC).

8. Procédé de fabrication du système catalytique selon l'une quelconque des revendications précédentes, qui comprend les étapes suivantes
(a) fourniture d'un matériau de support solide comprenant un matériau à noyau-enveloppe d'hydroxyde double stratifié ayant la formule I
Tₚ @ {[M^{Z+}₍₁₋ₓ₎M'ₓ^{y+}(OH)₂]^{a+}(Xⁿ⁻)_{a/n}●bH₂O●c(AMO-solvant)}_{q} (I)
T étant un matériau de cadre solide, poreux, contenant un oxyde inorganique, M^{Z+} et M'^{y+} étant des cations métalliques chargés choisis indépendamment ; M^{z+} étant un cation métallique de charge z ou un mélange d'au moins deux cations métalliques ayant chacun indépendamment la charge z ; M'^{y+} étant un cation métallique de charge y ou un mélange d'au moins deux cations métalliques ayant chacun indépendamment la charge y ;
z = 1 ou 2 ;
y = 3 ou 4 ;
0 < x < 0,9 ;
b étant compris entre 0 et 10 ;
c étant compris entre 0,01 et 10 ;
p > 0 ;
q>0 ;
xⁿ⁻ étant un anion ; avec n > 0 ;
a = z(1-x) + xy-2 ; et
l'AMO-solvant étant un solvant organique qui est complètement miscible à l'eau ; et
(b) traitement thermique du matériau à noyau-enveloppe d'hydroxyde double stratifié ;
(c) activation du matériau obtenu à l'étape de traitement thermique (b) ; et
(d) traitement du matériau activé obtenu à l'étape (c) avec au moins un complexe de métal de transition catalytique ayant une activité catalytique de polymérisation d'oléfines ;
T étant un matériau de tamis moléculaire choisi parmi le silicate d'aluminium, le silicate de vanadium, le silicate de fer, le phosphate de silicium-aluminium (SAPO) et le phosphate d'aluminium (AIPO) ;
l'AMO-solvant étant choisi parmi l'acétone, le méthanol, l'éthanol ou l'isopropanol ; et
le complexe de métal de transition catalytique étant au moins un complexe d'un métal choisi parmi le zirconium, le fer, le chrome, le cobalt, le nickel, le titane et le hafnium, le complexe contenant au moins un ligand aromatique ou hétéroaromatique.

9. Procédé selon la revendication 8, comprenant en outre l'étape consistant à calciner les microparticules de noyau-AMO-LDH avant l'étape de traitement (b).

10. Procédé selon la revendication 8 ou 9, comprenant en outre une étape consistant à traiter les microparticules de noyau-AMO-LDH calcinées avec un alkylaluminoxane, de préférence du méthylaluminoxane (MAO) et/ou du méthylaluminoxane modifié (MMAO), avant l'étape de traitement (b).

11. Utilisation d'un système catalytique selon l'une quelconque des revendications 1 à 7 en combinaison avec un agent de récupération approprié en tant que catalyseur dans la polymérisation et/ou copolymérisation d'au moins une oléfine pour produire un homopolymère et/ou un copolymère, comprenant de préférence 1 à 10 % en poids d'une (4-8C) α-oléfine, associée.

12. Utilisation d'un système catalytique selon la revendication 11, un agent de récupération approprié étant un alkylaluminoxane, de préférence du méthylaluminoxane (MAO) ou du méthylaluminoxane modifié (MMAO) ou du triisobutylaluminium (TIBA), du triéthylaluminium (TEA) ou du chlorure de diéthylène-aluminium (DEAC).

13. Procédé de préparation d'un homopolymère de polyoléfine ou d'un copolymère de polyoléfine, qui comprend la réaction de monomères oléfiniques en présence d'un système catalytique selon l'une quelconque des revendications 1 à 7, la polyoléfine étant de préférence un polyéthylène et le monomère oléfinique étant de préférence un éthylène.

14. Procédé de production d'un polymère d'une oléfine, de préférence d'éthylène, qui comprend la mise en contact de l'oléfine avec le système catalytique solide selon l'une quelconque des revendications 1 à 7.

15. Procédé selon la revendication 13 ou 14, **caractérisé en ce que** le procédé est réalisé à une température comprise entre 50 et 100 °C, de préférence entre 70 et 80 °C.
